**Europäisches Patentamt**

**European Patent Office**

**Office européen des brevets**

(19)

(11) Veröffentlichungsnummer : **0 359 074 B1**

(12) **EUROPÄISCHE PATENTSCHRIFT**

(45) Veröffentlichungstag der Patentschrift :
**20.05.92 Patentblatt 92/21**

(51) Int. Cl.$^5$ : **C02F 1/70,** B01J 35/10,
B01J 23/42, B01J 23/46,
B01J 23/89

(21) Anmeldenummer : **89116245.5**

(22) Anmeldetag : **02.09.89**

(54) **Verfahren, Katalysator und Anlage zur Entfernung des Nitrit- und/oder Nitratgehaltes in Wasser.**

(30) Priorität : **10.09.88 DE 3830850**

(43) Veröffentlichungstag der Anmeldung :
**21.03.90 Patentblatt 90/12**

(45) Bekanntmachung des Hinweises auf die
Patenterteilung :
**20.05.92 Patentblatt 92/21**

(84) Benannte Vertragsstaaten :
**AT BE CH DE ES FR GB GR IT LI LU NL SE**

(56) Entgegenhaltungen :
**EP-A- 0 096 759**
**EP-A- 0 204 273**
**US-A- 3 978 000**
**US-A- 4 383 940**

(73) Patentinhaber : **Solvay Umweltchemie GmbH**
**Seligmannallee 1 Postfach 220**
**W-3000 Hannover 1 (DE)**

(72) Erfinder : **Vorlop, Klaus Dieter**
**Hochstrasse 7**
**W-3300 Braunschweig (DE)**
Erfinder : **Tacke, Thomas**
**Heinrich-Heine-Strasse 10**
**W-3300 Braunschweig (DE)**
Erfinder : **Sell, Michael**
**Mergelkamp 5**
**W-3150 Peine (DE)**
Erfinder : **Strauss, Günther**
**Alte Döhrener Strasse 43**
**W-3000 Hannover (DE)**

(74) Vertreter : **Lauer, Dieter, Dr.**
**c/o Kali-Chemie AG Postfach 220**
**Hans-Böckler-Allee 20**
**W-3000 Hannover 1 (DE)**

**Beschreibung**

Die vorliegende Erfindung betrifft die Entfernung oder Verminderung des Nitrit- und/oder Nitratgehaltes in Wasser.

Die in Grund- und Oberflächenwasser in der Bundesrepublik Deutschland aufgefundenen Nitrit- und/oder Nitratgehalte sind in den letzten Jahren stark angestiegen. Sie schwanken je nach Standort erheblich und können teilweise die tolerierbaren Höchstgrenzen überschreiten. Für Trinkwasser wird in den neuesten EG-Richtlinien ein zulässiger Grenzwert von 50 mg Nitrat/l empfohlen, und für Nitrit ein Grenzwert von 0,1 mg/l. Die steigenden Nitrat- und Nitritgehalte in vielen Grund- und Oberflächenwassern machen in zunehmendem Maße Verfahren zur Nitrit- und Nitratentfernung im Rahmen der Trinkwasseraufbereitung nötig.

Zur Nitrit- und Nitratentfernung als Trinkwasser stehen in erster Linie biologische Verfahren und physikalischchemische Maßnahmen im Bereich der Wasserentsalzung zur Verfügung. In der biologischen Denitrifikation werden Bakterien eingesetzt, welche in Abwesenheit von Sauerstoff Nitrit und Nitrat als terminalen Wasserstoffakzeptor verarbeiten. Nachteil dieser Methode ist die Gefahr der Kontamination des Trinkwassers mit Bakterien oder deren Stoffwechselprodukten, so daß eine Nachreinigung des so behandelten Wassers nötig ist. Bei physikalischer Salzabtrennung findet nur eine Verlagerung des Problems statt, da nitrit- und/oder nitratreiche Abwässer erhalten werden, welche ihrerseits entsorgt werden müssen. Dementsprechend ist die bisherige Nitrit- und/oder Nitratentfernung aus Wasser mit relativ hohen Kosten verbunden.

EP-A-0 204 273 beschreibt ein Verfahren zum Entfernen von Nitrat aus Wasser, in welchem vor der biologischen Denitrifikation eine katalytische Desoxidation des Wassers durch Oxidation von Zudosiertem Wasserstoff durchgeführt wird.

Aufgabe der vorliegenden Erfindung ist es, neue wirtschaftlich arbeitende Verfahren zur Entfernung von Nitrit und/ oder Nitrat aus Wasser bereitzustellen.

Insbesondere ist es Aufgabe der Erfindung, chemische Verfahren zur Entfernung von Nitrit und/oder Nitrat aus nitrit- und/oder nitratbelasteten Wassern zu entwickeln, welche bei den bei der Wasseraufbereitung üblichen Bedingungen durchführbar sind, und bei welchen der Nitrit- und/oder Nitratgehalt unter Bildung von gasförmigen Produkten, insbesondere Stickstoff, entfernt wird, ohne daß dabei das Wasser mit unerwünschten Mengen an Ammonium belastet wird.

Es wurde nun ein kontinuierlich durchführbares katalytisches Reduktionsverfahren gefunden, mit welchem Nitrit und/oder Nitrat aus Wasser entfernt werden können unter Bildung von nicht toxischen gasförmigen Reduktionsprodukten, überwiegend Stickstoff, und unter weitgehender Vermeidung der Bildung von Ammoniumionen, und welches insbesondere bei der Aufbereitung von nitrit-und/oder nitratbelasteten Grundwässern, Flußwässern, Quellwässern oder industriellen Abwässern, beispielsweise im Rahmen der Herstellung von Brauchwässern für die Lebensmittel- oder Getränkeindustrie oder von Trinkwasser und zur Entfernung von Nitrit und/oder Nitrat aus Getränken wie Mineralwässern oder Fruchtsäften verwendbar ist.

Gegenstand der Erfindung ist ein kontinuierlich durchführbares Verfahren zur Entfernung oder Verminderung des Nitrit- und/oder Nitratgehaltes von nitrit- und/oder nitratbelastetem Wasser unter selektiver Stickstoff-Bildung, dadurch gekennzeichnet, daß man:

in das nitrit- oder nitratbelastete Wasser Wasserstoffgas einführt und das mit Wasserstoff beladene Wasser mit einem Metallkatalysator kontaktiert,

welcher gebildet wird aus einem mit einer aus Palladium und/oder Rhodium oder aus Palladium und einem Metall der Kupfergruppe bestehenden Metallkomponente imprägnierten porösen Träger, welcher

a) eine bimodale Porenradienverteilung mit einem mindestens 20 %-igen Anteil bezogen auf das Gesamtporenvolumen an Makroporen mit einem Mindestradius von 2000 Å besitzt und/oder

b) eine inhomogene Verteilung des Metalls mit einer Konzentrierung im Oberflächenbereich aufweist oder

c) als Pulver vorliegt,

und dabei zur Behandlung von nur nitritbelastetem Wasser einen Katalysator, dessen Metallkomponente aus Palladium und/oder Rhodium besteht und, sofern das zu behandelnde Wasser auch Nitrat enthält, einen Katalysator, dessen Metallkomponente aus Palladium und einem Metall der Kupfergruppe oder aus Rhodium und gegebenenfalls Palladium besteht, oder ein Gemisch aus einem Katalysator, dessen Metallkomponente aus Palladium und einem Metall der Kupfergruppe besteht, und einem Katalysator, dessen Metallkomponente nur aus Palladium besteht, einsetzt, und dabei den pH-Wert des Wassers nicht über pH 8 ansteigen läßt und das Verfahren gegebenenfalls so oft hintereinander durchführt, bis der Nitrit- und/oder Nitratgehalt des Wassers entfernt oder auf einen tolerierbaren Wert vermindert ist.

Gegenstand der Erfindung ist ferner ein zur Durchführung des vorstehenden Verfahrens besonders geeigneter Katalysator, welcher aus einem mit einer Metallkomponente imprägnierten porösen anorganischem Trägermaterial besteht und welcher dadurch gekennzeichnet ist, daß die Metallkomponente aus Palladium und/oder Rhodium oder Palladium und einem Metall aus der Kupfergruppe besteht und das Trägermaterial eine bimodale Porenradienverteilung mit einem mindestens 20 %-igem Anteil bezogen auf das Gesamtporenvolumen an Makroporen mit einem Mindestradius von 2000 Å besitzt.

Im Rahmen der vorliegenden Erfindung können nitrit- oder nitratbelastete Wasser und wäßrige Lösungen beliebiger Herkunft behandelt werden, sofern, sie frei von merklichen Mengen von unter den Reaktionsbedingungen des erfindungsgemäßen Verfahrens reduzierbaren Stoffen und frei von Stoffen sind, welche bekanntermaßen als Gifte für palladium-, rhodium- oder kupferhaltige Katalysatoren wirken oder das Trägermaterial angreifen können. In der vorliegenden Anmeldung bezeichnet der Ausdruck "Wasser" derartige Wässer und wäßrige Lösungen. Der Nitrit-und/oder Nitratgehalt, welcher mit dem erfindungsgemäßen Verfahren entfernt oder auf eine tolerierbare Menge vermindert werden kann, kann in einem weiten Bereich variieren. So lassen sich mit dem erfindungsgemäßen Verfahren Wasser mit einer Nitrit- und/oder Nitratbelastung zwischen 0,1 mg/l und einigen Gramm pro Liter behandeln. Insbesondere ist das vorliegende Verfahren geeignet zur Entfernung des Nitrit- und/oder Nitratgehaltes aus Wasser mit einer geringen Nitrit- und/oder Nitratbelastung beispielsweise im Bereich von etwa 0,1 bis etwa 20 mg/l Nitrit- und/oder etwa 10 bis 300 mg/l Nitrat.

Insbesondere wird das erfindungsgemäße Verfahren zur Entfernung von Nitrit- und/oder Nitrat aus Wasser eingesetzt, welches in seinem Reinheitsgrad einem Wasser entspricht, welches eine natürliche Filtration durchlaufen hat. Derartiges Wasser kann wasserlösliche Substanzen, z.B. anorganische Salze, in Größenordnungen, wie sie im Grundwasser anzutreffen sind, also z.B. bis zu einigen Gramm pro Liter, enthalten. Beispiele von mit dem erfindungsgemäßen Verfahren zu behandelnden nitrit- oder nitratbelasteten Wassern sind z.B. Grundwasser, Brunnenwasser, Quellwasser oder Uferfiltrate oder bereits entsprechend vorgereinigte sonstige Abwässer, z.B. industrielle Abwässer, beispielsweise aus Rauchgaswäschen, aber auch Getränke wie Mineralwässer, Limonaden und Fruchtsäfte.

Das Verfahren eignet sich beispielsweise zur Anwendung im Rahmen der Trinkwasseraufarbeitung sowie der Aufbereitung von Brauchwasser für die Lebensmittel- oder Getränkeindustrie sowie für sonstige Zwecke, wo ein nitrit- und/oder nitratarmes oder -freies und sauerstofffreies oder -armes Wasser benötigt wird.

Die katalytische Reduktion von Nitrit und von Nitrat zu Stickstoff mit Wasserstoff kann durch die folgenden Gleichungen summarisch wiedergegeben werden

$$2\ NO_3^- + 5\ H_2 \rightarrow N_2 + 2OH^- + 4\ H_2O$$
$$2\ NO_2^- + 3\ H_2 \rightarrow N_2 + 2OH^- + 2\ H_2O$$

Bei der Reduktion wird also eine der reduzierten Nitrit-und/oder Nitratmenge äquivalente Menge Hydroxylionen frei. Dies führt zu einem von der Menge des zu reduzierenden Nitrits und Nitrats bzw. des zur Reduktion zur Verfügung stehenden Wasserstoffes abhängigen Anstieg des pH-Wertes des behandelten Wassers.

Zweckmäßig wird der pH-Wert des Wassers so reguliert, daß der reaktionsbedingte Anstieg nicht zu Werten über pH 8, vorzugsweise nicht über etwa pH 7 führt. Die Einstellung des pH-Wertes kann z.B. durch Zugabe einer wäßrigen Lösung einer Säure, vorzugsweise einer verdünnten anorganischen Säure wie Salzsäure, beispielsweise 0,1 - 1 n-Salzsäure, oder $CO_2$ erfolgen.

Das Einleiten des Wasserstoffgases in das Wasser und eine gegebenenfalls nötige pH-Regulierung können gewünschtenfalls erfolgen, während das Wasser mit dem Katalysator in Kontakt ist. Hierzu kann das Wasser in ein den Katalysator enthaltendes Reaktionsgefäß gegeben werden und darin mit Wasserstoff begast werden. In dieser Verfahrensweise kann der Wasserstoffverbrauch durch eine ständige Begasung fortlaufend ersetzt werden.

Zweckmäßig wird jedoch das Wasserstoffgas in einem separaten Begasungsbehälter in das Wasser eingebracht, bevor dieses mit dem Katalysator kontaktiert wird. Hierbei ist es zweckmäßig, auch den pH-Wert des zu behandelnden Wassers vor der Begasung mit Wasserstoff so einzuregulieren, daß der nachfolgende pH-Anstieg im gewünschten Bereich bleibt, und/oder den pH-Wert des Wassers während es mit dem Metallkatalysator in Kontakt ist, auf den gewünschten Bereich einzuregulieren, vorzugsweise in etwa konstant zu halten. Vorzugsweise sollte der pH-Wert des zu behandelnden Wassers auf einen Bereich von etwa 2 bis 8, insbesondere 4 bis 7, einreguliert werden.

Unter den Bedingungen des erfindungsgemäßen Verfahrens wird neben Nitrit und/oder Nitrat auch der in dem belasteten Wasser gelöste Sauerstoff reduziert. Zur vollständigen Entfernung des Nitrit- und /oder Nitrat-Gehaltes des Wassers wird daher insgesamt eine solche Menge Wasserstoffgas benötigt, welche mindestens der zur Reduktion des Sauerstoffgehaltes und des Nitrit- und/oder Nitrat-Gehaltes des Wassers stöchiometrisch notwendigen Menge entspricht. Z.B. sind zur Reduktion von 100 mg Nitrat theoretisch etwa 9 mg Wasserstoff erforderlich. Sofern das zu behandelnde Wasser nur geringere Mengen an Nitrit und/oder Nitrat enthält, erweist es sich als zweckmäßig eine solche Menge Wasserstoff einzufügen, welche mindestens der stöchiometrisch berechneten Menge und höchstens einem 20 %igen Überschuß dieser berechneten Menge entspricht.

Die Begasung des Wassers mit Wasserstoff kann in an sich bekannter Weise, z.B. über Gassättiger, erfolgen, wobei es jedoch wesentlich ist, daß der Wasserstoff möglichst feinperlig und ohne Gasblasenbildung eingeführt und gleichmäßig in dem Wasser verteilt wird. Als besonders geeignet erweist sich dabei die an sich bekannte Permeationsbegasung. Hierbei wird der Gaseintrag in das Wasser über eine feste Membran, beispielsweise eine Silikonkautschukmembran durchgeführt. Es können unverstärkte oder gewebeverstärkte Silikonschläuche bzw. -Flachmembranen hierfür eingesetzt werden. Ein wesentliches Merkmal der Permeationsbegasung ist der blasenfreie Gaseintrag aufgrund des ausschließlich auf Diffusions- und Löslichkeitsvorgängen beruhenden Stofftransportes in dem porenfreien Membranmaterial. Ein weiterer Vorzug der Permeationsbegasung liegt darin, daß der Gaseintrag durch einfache Vergrößerung des Gaspartialdruckes im Membransystem gesteigert werden kann. Dies erweist sich als vorteilhaft, wenn größere Mengen Wasserstoff benötigt werden. Ferner ist es zweckmäßig, durch Rühren zur besseren Verteilung des Wasserstoffes in dem Wasser beizutragen.

Das erfindungsgemäße Verfahren kann bei Normaldruck oder geringem Überdruck, z.B. bis zu 10 Atmosphären, arbeiten. Die Löslichkeit des Wasserstoffgases in dem Wasser liegt bei Normaldruck und Temperaturen zwischen 10 und 25 °C unter 2 mg/l und wird bei Verdoppelung des Druckes auch jeweils verdoppelt. Wo zur Reduktion höherer Nitrit-und/oder Nitratmengen entsprechend größere Mengen Wasserstoff benötigt werden, empfiehlt es sich daher, die Begasung unter druck vorzunehmen.

Sofern die Begasung des Wassers mit Wasserstoff und der Kontakt mit dem Katalysator gleichzeitig erfolgen, wird das Wasser mit dem Katalysator während einer solchen Zeitdauer in Kontakt gebracht, welche nötig ist, um das Nitrit und/oder Nitrat zu Stickstoff zu reduzieren. Die Kontaktzeiten sollen zweckmäßigerweise nicht wesentlich über die benötigte Zeitdauer hinaus gehen, da längere Kontaktzeiten die weitere Reduktion des Stickstoffes über die Nullstufe hinaus zu Ammonium begünstigen können. Die Wasserstoff-Begasungsrate kann je nach Art des Katalysators und Höhe des zu reduzierenden Nitrat-und/oder Nitrat gehaltes sowie der durchzusetzenden Wassermenge variieren und beispielsweise zwischen 1 und 500 ml $H_2$/min betragen. Niedrige Begasungsraten tragen zur weitgehenden Vermeidung von $NH_4$-Bildung bei.

Falls die Begasung des Wassers mit Wasserstoff und die Kontaktierung des mit Wasserstoff beladenen Wassers getrennt nacheinander erfolgen, findet der Kontakt des Wassers mit dem Katalysator zweckmäßigerweise in einem den Katalysator enthaltenden Reaktor statt, welche bevorzugt als Festbettreaktor oder auch als Wirbelbett- oder Fließbettreaktor ausgebildet ist. Die Durchlaufgeschwindigkeit wird je nach Grad der Nitrit-und/oder Nitratbelastung des Wassers und der Nitrit-und/oder Nitratabbauleistungsfähigkeit des eingesetzten Katalysators variieren.

Sofern der Sauerstoffgehalt und der Nitrit- und/oder Nitrat-Gehalt des Wassers so hoch sind, daß auch bei Sättigung des Wassers mit Wasserstoffgas bei geringem Überdruck keine zur Reduktion des Gesamtgehaltes an Sauerstoff und Nitrit und/oder Nitrat ausreichende Menge Wasserstoff eingebracht werden kann, wird bei der anschließenden Kontaktierung des mit Waserstoff beladenen Wassers mit dem Katalysator nur ein Teil des Nitrit-und/oder Nitrat-Gehaltes entfernt. Das teilentlastete Wasser wird sodann anschließend nochmals mit Wasserstoff begast und mit dem Katalysator kontaktiert, wobei wiederum dafür gesorgt wird, daß der pH-Wert nicht über pH 8 ansteigt. Das Verfahren wird so oft nacheinander durchgeführt, bis eine ausreichende Verminderung, z.B. auf für Trinkwasser tolerierbare Werte, d.h. Werte, welche unter den für Trinkwasser empfohlenen Grenzwerten liegen, oder eine vollständige Entfernung des Nitrit- und/oder Nitrat-Gehaltes des Wassers erreicht ist.

Gewünschtenfalls kann das Wasser hierzu mehrere kaskadenartig unter Zwischenschaltung einer pH-Meß- und Regelzelle hintereinandergeschaltete, jeweils einen Begasungsbehälter und einen Reaktor enthaltende Reaktionseinheiten nacheinander durchlaufen. Hierbei wird der pH-Wert des Wassers beim Weiterleiten von einer Reaktionseinheit in die nachfolgende Reaktionseinheit gegebenenfalls neu einreguliert. In einer anderen Verfahrensausführung kann auch ein Wasser, dessen Nitrit- und/oder Nitratgehalt bei einem ersten Durchlaufen des Begasungsbehälters und des Reaktors nicht vollständig entfernt wurde, nochmals in den Reaktionskreislauf zurückgeführt werden.

Das erfindungsgemäße Verfahren läßt sich, z.B. über die eingesetzte Wasserstoffmenge, so steuern, daß jede beliebige Restkonzentration des ursprünglichen Nitrit-und/oder Nitratgehaltes in dem behandelten Wasser eingestellt werden kann.

Die Temperatur kann zwischen ca. 5 und 40 °C, vorzugsweise zwischen 10 und 25 °C, betragen.

Für das erfindungsgemäße Verfahren werden Metallkatalysatoren eingesetzt, welche aus einem mit der Metallkomponente imprägnierten porösen Trägermaterial gebildet werden. Als Metallkomponente werden Palladium und/oder Rhodium verwendet, falls nur Nitrit aus dem Wasser zu entfernen ist. Falls das Wasser auch Nitrat enthält wird Palladium in Kombination mit einem Metall der Kupfergruppe verwendet oder auch Rhodium verwendet. Als Metalle der Kupfergruppe eignen sich insbesondere Kupfer und Silber. Vorzugsweise wird Kupfer eingesetzt.

Der Anteil der Metallkomponente am Gesamtkatalysator kann zwischen 0,1 und 10 Gew.-%, vorzugsweise zwischen 1 und 10, insbesondere zwischen 2 und 8 Gew.-% betragen.

Als günstig erweist sich ein Palladiumgehalt von 1 bis 5 Gew.-%, insbesondere 2 bis 5 Gew.-%, bezogen auf das Gesamtgewicht des Katalysators.

Vorzugsweise wird als Metallkomponente des Katalysators eine Kombination von Palladium mit Kupfer eingesetzt. Diese Kombination erweist sich sowohl in ihrer Aktivität zur Hydrierung von Nitrit und Nitrat wie auch in ihrer Selektivität (selektive Hydrierung zu molekularem Stickstoff) als günstig. Das Gewichtsverhältnis von Palladium zu Kupfer kann zwischen 2 : 1 und 8 : 1, insbesondere 3 : 1 und 5 : 1, liegen und beträgt bevorzugt 4 : 1.

Zur Behandlung von nitratbelastetem oder nitrat- und nitritbelastetem Wasser kann vorteilhaft auch ein Gemisch aus nur Palladium als Metallkomponente enthaltenden Katalysatorteilchen und Palladium und ein Metall der Kupfergruppe, insbesondere Kupfer, als Metallkomponente enthaltenden Katalysatorteilchen eingesetzt werden. Das Gewichtsverhältnis von Pd-haltigen zu Pd/Cu-haltigen Katalysatorteilchen kann je nach dem Nitrat- und Nitritgehalt des Wassers und der Menge und Zusammensetzung der Metallkomponenten der Katalysatoren variieren und kann zwischen 1 : 5 und 5 : 1, vorzugsweise zwischen 1 : 2 und 2 : 1 liegen.

Die Nitrit- und/oder Nitratabbauleistung der erfindungsgemäß verwendeten Katalysatoren kann je nach der Nitritund/oder Nitratanfangskonzentration, dem pH-Wert, der Wasserstoffgaskonzentration bzw. -begasungsrate und der Temperatur sowie auch der Verteilung der Metallkomponente auf dem Trägermaterial variieren. Mit einem Palladium-Katalysator mit 5 Gew.-% Palladium auf $\gamma$-Aluminiumoxid können beispielsweise Nitritabbauleistungen von über 500 mg $NO_2^-$/h. g Katalysator erzielt werden. Mit einem mit Palladium und Kupfer dotierten Katalysator mit 2 Gew.-% Palladium und 0,5 Gew.-% Kupfer auf $\gamma$-Aluminiumoxid können beispielsweise Nitratabbauleistungen von bis zu 100 mg $NO_3^-$/h. g Katalysator erzielt werden.

Für das erfindungsgemäße Verfahren ist es wesentlich, daß der Katalysator so geformt ist, daß für die im Wasser ablaufende Reaktion nur die Reduktion selbst und nicht etwa Diffusionsvorgänge geschwindigkeitsbestimmend sind. Die Katalysatorteilchen müssen daher so stark mit als Diffusionswege wirksam werdenden Makroporen durchsetzt sein oder so klein sein, daß die Diffusion in dem wäßrigen Medium ausreichend schnell vonstatten geht. Dies ist erfindungsgemäß eine wesentliche Voraussetzung zur Vermeidung von Ammoniumbildung. Diese Voraussetzung erfüllen erfindungsgemäß eingesetzte Katalysatoren, deren Träger entweder aus porösem Material, welches eine bimodale Porenradienverteilung mit einem mindestens 20 %-igen Anteil bezogen auf das Gesamtporenvolumen an Makroporen mit einem Mindestradius von 2000 Å besitzt, bestehen und/oder welche eine inhomogene Verteilung des Metalls mit einer Konzentrierung im Oberflächenbereich aufweisen oder welche als Pulver mit einem Teilchendurchmesser kleiner als 50 µm vorliegen.

Als poröse Trägermaterialien mit einer bimodalen Porenradienverteilung eignen sich Materialien mit einem Maximum der Porenradienverteilung im Bereich von kleinen Poren mit einem Radius bis zu etwa 400 Å, beispielsweise zwischen etwa 50 und 350 Å, und einem zweiten Maximum der Porenradienverteilung im Bereich von Makroporen mit einem Radius von mindestens etwa 2000 Å. Als günstig erweist sich ein Trägermaterial mit einem Maximum der Porenradienverteilung im Bereich von kleinen Poren mit einem Radius von 50 bis 300 Å, insbesondere 50 bis 200 Å. Für den Makroporenbereich sind Porenradien im Bereich von etwa 5000 bis etwa 20.000 Å günstig. Der Makroporenanteil der bimodalen Trägermaterialien soll ausreichend hoch sein, um eine schnelle Diffusion zu gewährleisten und kann je nach Art und Größe der Trägerteilchen variieren. Als zweckmäßig erweisen sich zum Beispiel bimodale Trägermaterialien mit einem Makroporenanteil zwischen 20 und 80 %, beispiels weise 20 und 60 %, vorzugsweise 40 und 60 %, insbesondere 40 und 50 %, bezogen auf das Gesamtporenvolumen.

Eine schnelle Abdiffusion der reagierenden Agentien aus dem katalytisch aktiven Bereich des Katalysators kann auch dadurch gefördert werden, daß Katalysatoren eingesetzt werden, bei denen eine inhomogene Verteilung des Metalls auf dem Träger mit einer Konzentrierung im Oberflächenbereich vorliegt. Als zweckmäßig erweist sich z.B. eine inhomogene Metallverteilung, bei welcher das Metall an der Oberfläche mit einer Eindringtiefe von unter 50 µm, beispielsweise 2 bis 50 µm, konzentriert ist.

Eine schnelle Abdiffusion der reagierenden Agentien von dem Katalysator kann auch durch die Verwendung von pulverförmigen Katalysatoren, beispielsweise Katalysatorpulvern, deren Teilchen Teilchendurchmesser von unter 50 µm, insbesondere von unter 20 µm besitzen, erzielt werden.

Die BET-Oberflächen von Trägermaterialien mit den vorstehend beschriebenen Strukturen können im Bereich von etwa 20 bis 360, insbesondere 30 bis 300 m² /g variieren. Für Trägermaterialien mit bimodaler Porenverteilung liegen die BET-Oberflächen typischerweise im Bereich von 20-30 bis zu 200 m² /g, bei pulverförmigen Katalysatoren oder Katalysatoren mit inhomogener Metallverteilung im Bereich von 50 bis 200 m²/g.

Als Trägermaterialien für die erfindungsgemäß verwendbaren Katalysatoren können an sich zur Herstellung von Katalysatorträgern bekannte Materialien eingesetzt werden, sofern sie wasserfest sind und den vorstehend beschriebenen physikalischen Anforderungen entsprechen. So eignen sich als Trägermaterialien poröse keramische Materialien, beispielsweise wasserfeste Formen von Aluminiumoxiden wie $\gamma$-$Al_2O_3$, Siliciu-

5

moxiden und Alumosilikaten oder auch Aktivkohle.

Es können Trägerteilchen unterschiedlichster Form verwendet werden. So können die Träger z.B. in Form von Pulvern, Granulaten, Kugeln, Perlen, Zylindern, Hohlzylindern oder Hohlkugeln eingesetzt werden.

Für die technische Anwendung in Festbettreaktoren eignen sich insbesondere Schüttgutträger aus wasser- und abriebfesten anorganischen Materialien mit bimodaler Porenstruktur und/oder inhomogener Metallverteilung, d.h. Träger in Form von Teilchen im Makrobereich, d.h. mit Teilchengrößen von mindestens 1 mm Durchmesser. Die Teilchengrößen können je nach Größe des Katalysatorbettes und den Reaktionsbedingungen variieren. Je kleiner die Teilchen sind, umso größer ist bekanntermaßen der durch sie verursachte Druckverlust, während andererseits die Austauschfähigkeit eines Katalysators bekanntermaßen mit zunehmender Teilchengröße abnimmt. Die Teilchengrößen werden zweckmäßig so gewählt, daß bei technischer Reaktionsführung der Druckverlust bei ausreichender Austauschfähigkeit möglichst gering ist. Als zweckmäßig haben sich z.B. Teilchengrößen im Bereich von 1 bis 5 mm erwiesen. Diese Teilchen können in Form von Kugeln, Strangpreßlingen, Hohlzylindern, Hohlkugeln oder abriebfesten Granulaten vorliegen.

Pulverförmige Katalysatoren eignen sich für Ausführungsformen des Verfahrens, in welchen das Einleiten des Wasserstoffgases erfolgt, während das Wasser mit dem Katalysator in Kontakt ist, und zur Anwendung in Wirbelbettreaktoren.

Trägermaterialien mit bimodaler Porenradienverteilung können auf an sich bekannte Weise hergestellt werden. Beispielsweise können zur Herstellung von porösen keramischen Materialien mit bimodaler Porenradienverteilung den Trägermassen während der Herstellung Stoffe zugesetzt werden, die sich im Laufe des Herstellungsverfahrens wieder auswaschen oder ausbrennen lassen und dabei zur Bildung von Makroporen führen. Als sogenannte Ausbrennstoffe können verbrennbare organische Stoffe wie beispielsweise Holzmehl, Stärke, Saccharose oder ein Ammoniumsalz einer organischen Säure wie Ammoniumacetat, oder auch Ruß, zugegeben werden, welche bei dem anschließenden Brennen der Trägerteilchen aus dem Material ausbrennen und Makroporen hinterlassen. Dieses Verfahren ist insbesondere geeignet zur Herstellung von bimodalen Aluminiumoxidträgern. Beispielsweise können kugelförmige Aluminiumoxidträger nach dem in den DE-A-25 04 463 und DE-A-25 46 318 beschriebenen Verfahren erhalten werden, indem man ein Aluminiumoxidhydrosol mit einer in der Wärme hydrolysierbaren Base, z.B. Hexamethylentetramin, vermischt und der Mischung in Wasser unlösliche verbrennbare organische Stoffe oder Ruß und gegebenenfalls noch Tonerde und/oder Tonerdehydrat zumischt, die Mischung dann in eine mit Wasser nicht mischbare Flüssigkeit bei erhöhter Temperatur, beispielsweise Temperaturen zwischen 60 und 100 °C eintropft oder einsprüht, die gebildeten Gelteilchen in der mit Wasser nicht mischbaren Flüssigkeit bei der Fälltemperatur altern läßt, sodann wäscht und trocknet und anschließend calciniert.

Eine bimodale Porenradienverteilung kann auch in an sich bekannter Weise erhalten werden durch eine nachgeschaltete gezielte Temperung der Trägermaterialien bei Temperaturen im Bereich von ca. 600 bis ca. 1000 °C. Dieses Verfahren eignet sich insbesondere zur Porenaufweitung in $SiO_2$-Trägern. So lassen sich z.B. $SiO_2$-Trägermaterialien mit Porenradien zwischen 50 und 350 Å durch nachträgliches Tempern in bimodale Träger überführen. Beispielsweise kann in $SiO_2$-Perlen mit Porenradien um 215 Å durch eine 5-stündige Temperaturbehandlung bei 700 °C und anschließendes einstündiges Tempern bei 800 °C ein 20 %-iger Anteil an Makroporen im Bereich von 5000 - 50000 Å erzeugt werden.

Die Imprägnierung der Trägerteilchen mit der Metallkomponente kann nach an sich zur Katalysatorherstellung üblichen Methoden erfolgen. Beispielsweise können Metall salze oder komplexe Metallverbindungen im Tränkverfahren, Sprühverfahren oder Fällungsverfahren auf das Trägermaterial aufgebracht werden und nach Trocknung und anschließender Calcinierung in an sich bekannter Weise reduziert werden. So können beispielsweise die Trägerteilchen mit einer Lösung oder Suspensionen von Metallsalzen oder komplexen Metallverbindungen in Wasser oder einem organischen Lösungsmittel, beispielsweise einem niedern Alkohol wie Äthanol, oder Keton, oder deren Gemischen getränkt oder besprüht werden, nach dem Trocknen gegebenenfalls bei Temperaturen bis zu 600 °C, beispielsweise zwischen 500 und 600 °C, calciniert werden und dann mit einem metallfreien Reduktionsmittel, vorzugsweise Wasserstoff oder gegebenenfalls auch einem organischen Reduktionsmittel wie Hydrazin unter thermischer Behandlung bei Temperaturen im Bereich bis zu 550 °C, beispielsweise zwischen ca. 200 und 550 °C, reduziert werden.

Die Metallverteilung auf dem Trägermaterial kann in an sich bekannter Weise durch die Art der Imprägnierung variiert werden. So kann z.B. beim Tränken des Trägermaterials mit einer Lösung einer löslichen Metallverbindung die Eindringtiefe des Metalls in das Trägermaterial gesteuert werden durch Variation der Tränkzeit, z.B. zwischen 1 und 30 min und des Lösungsmittels, beispielsweise Wasser oder ein schneller verdampfendes organisches Lösungsmittel, z.B. ein niederer Alkohol wie Äthanol, oder deren Gemische. Durch kurze Tränkzeiten wird erreicht, daß das Metall hauptsächlich nur im Oberflächenbereich des Trägermaterials verbreitet wird. Eine weitgehende Konzentrierung des Metalls auf den Oberflächenbereich des Trägermaterials läßt sich auch erzielen im Fällungsverfahren, durch Aufsprühen einer Lösung oder Suspension der Metallverbindung oder durch überziehen des Trägermaterials mit einer die Metallverbindung enthaltenden Flüssigkeit. Bei Katalysatoren mit einer inhomogenen Metallverteilung mit einer Konzentrierung des Metalls im Oberflächenbereich, sogenannten Schalenkatalysatoren, wird der Reaktionsablauf von Diffusionsvorgängen wesentlich unabhängiger als bei Katalysatoren mit homogener Metallverteilung.

Um, insbesondere bei kontinuierlicher Verfahrensweise, mikrobiellen Bewuchs und Zusetzen des Reaktors zu vermeiden, empfiehlt es sich, das Wasser zunächst einer keimabtötenden Behandlung zu unterwerfen. Hierzu können zur Wasserdesinfizierung übliche Methoden verwendet werden, beispielsweise Bestrahlung mit UV-Licht, Ozonisierung oder Zusatz von Oxidationsmitteln wie Wasserstoffperoxid, Chlor, Chlordioxid oder Hypochloriten.

In einer bevorzugten Ausführungsform wird das Verfahren kontinuierlich durchgeführt. Diese bevorzugte Ausführungsform ist dadurch gekennzeichnet, daß man

a) das nitrit- und/oder nitratbelastete Wasser mit einem vorbestimmten Gehalt an Sauerstoff, Nitrit-und-/oder Nitrat kontinuierlich in einen Dosierbehälter (A) einleitet, in welchem der pH-Wert kontrolliert und nötigenfalls durch Zusatz von Säure auf einen Wert von höchstens pH 8, vorzugsweise zwischen pH 2 und pH 7, insbesondere pH 4 und pH 7, eingestellt wird,

b) das Wasser vor oder nach dem Durchfließen des Dosierbehälters (A) zur Keimtötung durch eine Entkeimungsvorrichtung, insbesondere eine UV-Durchflußlampe (B) leitet und

c) das so behandelte Wasser über eine die Durchflußgeschwindigkeit regulierende Pumpe (C) mit variabler Förderleistung durch eine oder mehrere Reaktionseinheiten (D), welche je einen Begasungsbehälter (E) und einen Reaktor (F) enthalten, leitet, worin das Wasser zunächst in den Begasungsbehälter (E) geführt und darin mit Wasserstoffgas gegebenenfalls unter Druck begast und innig vermischt wird und anschließend durch den ein Katalysatorbett mit dem Metallkatalysator enthaltenden Reaktor (F) geführt wird, wobei das Wasser insgesamt so viele Reaktionseinheiten (D) durchläuft, wie zur Reduktion des Sauerstoffgehaltes und des Nitrit-und/oder Nitratgehaltes des Wassers notwendig sind, wobei der pH-Wert des Wassers in Stufe a) und bei einem allfälligen Weiterleiten von einer Reaktionseinheit (D) in eine nachfolgende Reaktionseinheit (D) jeweils so einreguliert wird, daß ein reaktionsbedingtes Ansteigen des pH-Wertes in der nachfolgenden Reaktionseinheit höchstens bis zu pH 8 führt, und/oder im Reaktor (F) selbst der pH-Wert überwacht und nötigenfalls eine solche Menge Säure eindosiert wird, daß der pH-Wert pH 8 nicht überschreitet und vorzugsweise in etwa konstant gehalten wird.

Gewünschtenfalls kann das Wasser zur vollständigen Entfernung des Nitrit- und/oder Nitratgehaltes nacheinander durch mehrere kaskadenartig unter Zwischenschaltung von pH-Meß- und Regelzellen hintereinander geschaltete Reaktionseinheiten (D) geleitet werden. Hierbei wird der pH-Wert des aus einer Reaktionseinheit (D) ausfließenden Wassers vor Eintritt in die nachfolgende Reaktionseinheit (D) neu einreguliert. In einer anderen Verfahrensführung kann in einem ersten Durchgang durch eine Reaktionseinheit (D) erst teilweise entlastetes Wasser im Kreislauf nochmals in die Reaktionseinheit zurückgeleitet werden. Gewünschtenfalls kann der aus der UV-Durchflußlampe abfließende Wasserstrom geteilt und durch mehrere nebeneinander liegende Reaktionseinheiten (D) geleitet werden. Zweckmäßigerweise wird das Wasser nach Verlassen des Dosierbehälters (A) zunächst durch einen Durchlaufbehälter (A') geleitet, in welchem Meßsonden zur analytischen Kontrolle des Wassers, beispielsweise zur Bestimmung von Redoxpotential, Nitrit-und/oder Nitratgehalt, pH-Wert usw. angebracht sind. Ferner kann es zweckmäßig sein, sowohl vor Eintritt in die Reaktionseinheit (D) einen Durchflußmesser einzuschalten als auch innerhalb der Reaktionseinheit zwischen Begasungsbehälter und Reaktor weitere Meßstellen, z.B. mit Meßsonden versehene Durchlaufbehälter, zur Kontrolle der analytischen Daten und des Druckes einzuschalten.

Das aus dem Reaktor (F) abfließende Wasser kann zur Kontrolle durch einen weiteren mit Meßsonden, beispielsweise Sonden zur Bestimmung des pH-Wertes des Redoxpotentials, des Wasserstoffgehaltes, des Sauerstoffgehaltes, des Nitratgehaltes, des Nitritgehaltes und/oder des Ammoniumgehaltes, versehenen Durchlaufbehälter (G) geführt werden. Falls unter erhöhtem Druck gearbeitet wurde, kann das Wasser anschließend auf Normaldruck entspannt werden.

Das erhaltene Wasser kann auf an sich bekannte Weise weiterverarbeitet werden. Das Wasser ist praktisch frei von Sauerstoff. Es kann direkt für solche Zwecke eingesetzt werden, so sauerstofffreies Wasser benötigt wird, z.B. als Brauereiwasser. Gewünschtenfalls kann es auch im Rahmen der Trinkwasseraufbereitung in an sich bekannter Weise zur Wiederaufnahme von Sauerstoff belüftet werden, wobei auch eventuell noch gelöste geringe Restmengen an Gasen entfernt werden.

Gegenstand der Erfindung ist ferner eine Anlage zur Durchführung des vorstehend beschriebenen kontinuierlichen Verfahrens zur Entfernung des Nitrit- und/oder Nitratgehaltes aus Wasser, dadurch gekennzeichnet, daß sie umfaßt

a') einen Dosierbehälter (A), welcher einen Flüssigkeitseinlaß zum Einführen des Wassers und einen Flüssigkeitsauslaß zum Abführen des Wassers besitzt und mit einer pH-Meß-und -Regelvorrichtung versehen ist,

b′) eine Entkeimungsvorrichtung, vorzugsweise eine UV-Durchflußlampe (B),

c′) eine oder mehrere Reaktionseinheiten (D), welche gebildet sind aus je einem Begasungsbehälter (E), welcher mit einem Flüssigkeitseinlaß für das Wasser und an dem gegenüberliegenden Ende mit einem Flüssigkeitsauslaß für das Wasser versehen ist und einen über eine Permeationsmembran führenden Einlaß für Wasserstoffgas besitzt, und damit verbunden je einem ein Katalysatorbett mit einem vorstehend beschriebenen Katalysator enthaltenden Reaktor (F), welcher einen Flüssigkeitseinlaß für das Wasser und einen Flüssigkeitsauslaß für das Wasser besitzt und gegebenenfalls mit einer pH-Meß- und Regeleinrichtung versehen ist,

wobei Rohrleitungen zum Transport des Wassers den unter a′) beschriebenen Dosierbehälter (A) mit der unter b′) beschriebenen Entkeimungsvorrichtung (B) und diese oder den Dosierbehälter (A) über eine Pumpe (C) mit variabler Förderleistung mit dem unter c′) beschriebenen Begasungsbehälter (E) der Reaktionseinheit (D) und diesen gegebenenfalls über einen mit Meßsonden versehenen Durchflußbehälter mit dem Reaktor (F) verbinden, und allfällige mehrere nacheinandergeschaltete Reaktionseinheiten (D) mit einer gegebenenfalls mit einer pH-Meß-und Regeleinrichtung versehenen Rohrleitung untereinander verbunden sind.

Gewünschtenfalls können in den Rohrleitungen noch Meßstellen für analytische Daten des durchfließenden Wassers, Druckmesser, Durchflußmesser, und/oder Temperaturmesser angebracht sein.

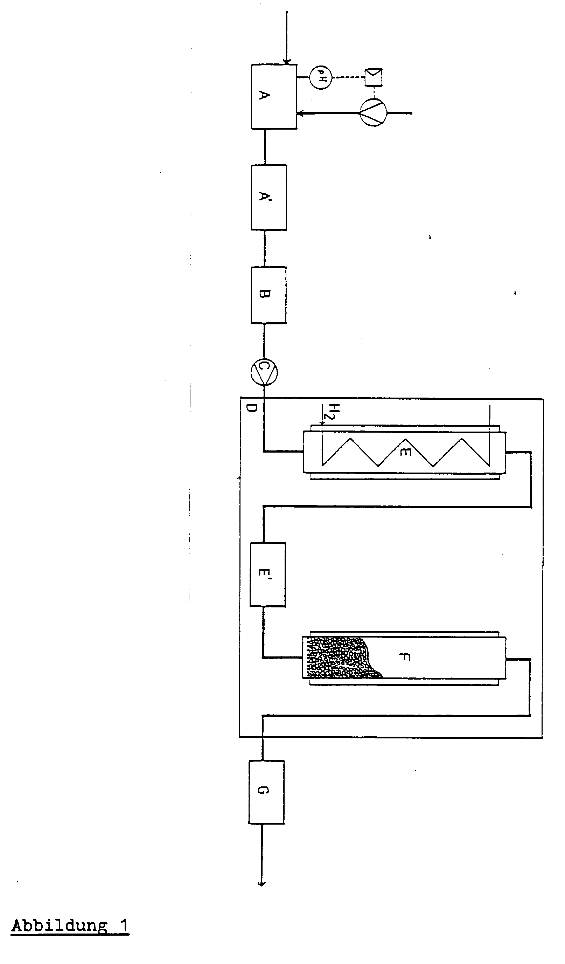

In Abb. 1 ist eine geeignete Ausführungsform einer solchen Anlage dargestellt. Das Wasser kann beispielsweise aus einem Vorratsbehälter in den Dosierbehälter (A) geleitet werden, in welchem der pH-Wert bestimmt und nötigenfalls eingestellt wird.

Das Wasser kann dann gewünschtenfalls weiter durch den Durchlaufbehälter (A′), welcher mehrere Meßsonden aufnehmen kann, geleitet werden. In diesem Behälter können der Sauerstoffgehalt und der Nitrit- und-/oder Nitratgehalt, das Redoxpotential und gewünschtenfalls weitere analytische Daten des Wassers bestimmt werden, welche zur Einstellung der Durchlaufgeschwindigkeit und der einzugebenden Wasserstoffmenge dienen können.

Sodann wird das Wasser zur weitgehenden Keimabtötung durch eine UV-Durchflußlampe (B) geleitet, um einen mikrobiellen Bewuchs in Begasungsbehälter und/oder im Reaktor bei kontinuierlichem Betrieb zu vermeiden. Sodann wird das Wasser über eine Pumpe (C) mit variabler Förderleistung in den Begasungsbehälter (E) der Reaktionseinheit (D) geleitet. Die Pumpe kann gegebenenfalls auch gleichzeitig zum Druckaufbau in der nachfolgenden Reaktionseinheit (D) dienen. Die geförderte Menge kann über einen Durchflußmesser kontrolliert werden. Der Begasungsbehälter ist mit einer Vorrichtung zur Permeationsbegasung versehen. Dies kann eine Flachmembran oder ein Schlauch aus unverstärktem und/oder gewebeverstärktem Silikonkautschuk sein. Zweckmäßigerweise ist der Begasungsbehälter zusätzlich mit einem Rührwerk ausgestattet. In einer bevorzugten Ausführungsform werden Permeationsmembranschläuche kreisförmig übereinander in den Begasungsbehälter gelegt und im Zentrum des Behälters eine magnetisch betriebene Rührwelle angebracht. Das eingetragene Volumen an Wasserstoff kann über einen Durchflußmesser kontrolliert werden. In dem Begasungsbehälter wird das durchfließende Wasser kontinuierlich mit dem Wasserstoffgas beladen.

Aus dem Begasungsbehälter fließt das mit Wasserstoff beladene Wasser in den Reaktor. Dabei kann es gewünschtenfalls wiederum einen Durchlaufbehälter (E′) mit Meßsonden zur Kontrolle von analytischen Parametern wie z.B. Druck, Redoxspannung und Wasserstoffkonzentration passieren. Der Reaktor kann als Festbettreaktor, welcher mit der Katalysatormasse gefüllt ist, oder als Wirbelbett- oder auch Fließbettreaktor ausgeführt sein.

In einer anderen Ausführungsform kann der Begasungsbehälter einen speziellen zur Aufnahme des Katalysators geeigneten Einsatz enthalten und als kombiniertes Begasungs/Reaktormodul genutzt werden.

Der Begasungs- und Reaktorbereich kann auf bis zu 10 bar Überdruck ausgelegt sein. Begasungs- und Reaktormodul können temperierbar sein, beispielsweise mit einem Temperiermantel versehen sein. Das aus dem Reaktor abfließende Wasser kann durch einen weiteren Durchflußbehälter (G) geleitet werden, welcher Meßsonden zur nochmaligen Kontrolle der analytischen Daten des Wassers aufnehmen kann.

Nach dem erfindungsgemäßen Verfahren gelingt es, Nitrit und/oder Nitrat aus Wasser, beispielsweise im Rahmen der Grundwasseraufbereitung, praktisch vollständig zu entfernen, ohne daß dabei die Umwelt belastende Nebenprodukte entstehen. Das erfindungsgemäße Verfahren zeichnet sich dadurch aus, daß die Reduktion des Nitrit und/oder Nitrat in dem wäßrigen Medium durch Hydrierung mit Hilfe der erfindungsgemäß eingesetzten Katalysatoren selektiv zu molekularem Stickstoff verläuft. Insbesondere wird bei der erfindungsgemäßen Verfahrensdurchführung eine als Neben- oder Folgereaktion oder Hydrierung mögliche Ammoniumbildung weitgehend vermieden, so daß in dem behandelten Wasser Ammoniumgehalte unterhalb der für Trinkwasser empfohlenen Grenzwerte für Ammonium (0,5 ppm) erreicht werden können.

Als besonders zweckmäßig zur Erzielung von weitgehend $NH_4$-freien Wasserqualitäten haben sich teilchenförmige Katalysatoren mit Teilchendurchmessern im Bereich von 1 bis 5 mm erwiesen, deren Trägermaterial aus wasser- und abriebfesten anorganischen Materialien aus der Gruppe Aluminiumoxide, vorzugsweise γ-Aluminiumoxid, Siliciumoxide oder Alumosilikate besteht und eine bimodale Poren struktur mit einem Maximum der Porenradienverteilung im Bereich von Mesoporen mit einem Radius zwischen 50 und 350, insbesondere 50 und 300 Å und einem zweiten Maximum der Porenradienverteilung im Bereich von Makroporen mit einem Radius von über 5000 Å besitzt, und deren Metallkomponente aus 1 bis 5, vorzugsweise 2 bis 5, Gew.-% Palladium bezogen auf das Gasamtkatalysatorgewicht und gegebenenfalls zusätzlich noch einem Fünftel bis einem Drittel, insbesondere ca. einem Viertel des Palladiumgehaltes an Kupfer besteht.

Geeignet sind auch Pulverkatalysatoren mit Teilchendurchmessern im Bereich von 2 bis 50 μm, vorzugsweise unter 20 μm, aus wasserfesten Trägermaterialien mit Porenradien im Bereich von 50 bis 350, insbesondere 50 bis 300 Å und der vorstehend angegebenen Metallkomponente. Ebenfalls geeignet sind Schalenkatalysatoren aus wasser- und abriebfesten Trägern mit einer Konzentration der Metallkomponente im Oberflächenbereich bis zu 2 bis 50 μm Eindringtiefe.

Die nachfolgenden Beispiele sollen die Erfindung näher erläutern, ohne jedoch ihren Umfang zu beschränken.

## Beispiel 1:

Entfernung von Nitrit aus Wasser.

Die Umsetzung wurde in einer diskontinuierlichen Meßapparatur durchgeführt, welche einen temperierbaren 500 ml fassenden Reaktor mit einem Magnetrührer enthielt, in welchen Wasserstoff am Boden über einen porösen Kunststoffschlauch mit Nadelventil zur Einstellung des Wasserstoff-Volumenstroms eingeleitet werden konnte. Die Apparatur war ferner mit einer pH-Meß- und Regeleinheit versehen, deren in dem Reaktor befindliche pH-Meßelektrode die während der Reaktion stattfindende Abweichung des pH-Wertes vom pH-Anfangswert messen und über eine Dosiervorrichtung die Änderung des pH-Wertes durch Zugabe von wäßriger verdünnter Salzsäurelösung ausgleichen kann. Das zur Konstanthaltung des pH-Wertes zudosierte Säurevolumen, welches der umgesetzten Nitritmenge proportional ist, wurde auf einen Meßschreiber aufgezeichnet.

In den Reaktor wurden 500 ml Wasser mit einem Nitritgehalt von 100 ppm und einem pH von 6,0 und 2,0 g eines Palladium/γ-Aluminiumoxid-Katalysatorpulvers (5 % Pd auf γ-$Al_2O_3$, Partikelgröße zwischen 1 und 20 μ, BET-Oberfläche 90 m²/g, Hersteller Fa. Alderich) gegeben. Die Temperatur im Reaktor wurde auf 10 °C eingestellt, und es wurde mit Wasserstoff mit einer Begasungsrate von 10 ml/min begast. Nach 20 min war das Nitrit vollständig abgebaut. Die spezifische Nitritabbauleistung des Katalysators bis zum vollständigen Umsatz von 50 mg Nitrit in 500 ml Wasser wurde auf 1 Stunde und 1 g Katalysator berechnet. Nach Beendigung des Versuches wurde die Ammoniumkonzentration der Lösung photometrisch bestimmt.

Spezifische Nitritabbauleistung: 67 mg $NO_2^-$/h.g Katalysator,
$NH_4$-Konzentration in der Lösung: 0,3 ppm.

## Beispiel 2:

Entfernung von Nitrit aus Wasser.

Die Umsetzung wurde in der in Beispiel 1 beschriebenen diskontinuierlichen Meßapparatur durchgeführt.
In den Reaktor wurden 500 ml Wasser mit einem Nitritgehalt von 100 ppm und einem pH von 6,0 und 8,0 g eines der nachfolgend angeführten Katalysatoren (Partikelgröße zwischen 1 und 20 μ) gegeben. Die Temperatur im Reaktor wurde auf 10 °C eingestellt, und es wurde mit Wasserstoff mit einer Begasungsrate von 0,5 l/min begast. Die spezifische Nitritabbauleistung der Katalysatoren bis zum vollständigen Umsatz von 50 mg Nitrit in 500 ml Wasser wurde auf 1 Stunde und 1 g Katalysator berechnet.

| Nr. | Katalysator | Spezifische Nitritabbauleistung mg $NO_2^-$/h.g Katalysator |
|---|---|---|
| 2a | Pd 5 % auf Aktivkohle* | 469 |
| 2b | Pd 5 % auf γ $Al_2O_3$    * (=der in Beispiel 1 verwendete Katalysator) | 208 |

*Hersteller Fa. Aldrich

Beispiel 3:

Entfernung von Nitrit aus Wasser.

Nach der in Beispiel 1 beschriebenen Methode wurde die spezifische Nitritabbauleistung in Wasser der in der nachfolgenden Tabelle angeführten Palladium- und Rhodium-Katalysatoren bestimmt.

Zur Herstellung der Katalysatoren wurde auf das jeweilige Trägermaterial eine Metallverbindung nach einer der nachfolgenden Methoden a) - c) aufgebracht.

a) Das Trägermatrial wurde mit einer ausreichenden Menge einer wäßrigen Tetraammoniumpalladium(II)-hydroxid-Lösung (Pd-Gehalt 0,1 - 0,6 Gew.-%) in einer rotierenden Trommel zur Trockne eingedampft. Das Material wurde ca. 16 Stunden bei 80 °C nachgetrocknet.

b) Das Trägermaterial wurde mit einer ausreichenden Menge einer 2 bis 8 gew.-%-igen äthanolischen $PdCl_2$-Lösung oder einer Rh(III)-nitrat-Lösung in einem Wasser/Äthanolgemisch während 1-2 min bei Raumtemperatur getränkt, abgetrennt und anschließend luftgetrocknet. Sofern nicht alle Tränklösung in der Tränkzeit aufgenommen wurde, wurde nach der anschließenden Calcinierung das Tränken mit der verbleibenden Tränklösung wiederholt.

c) Auf 10 g des Trägermatrials wurde eine Suspension aus 0,33 g $PdCl_2$ und 3,0 g Aluminiumoxid (Typ SD der Fa. Condea) in 5 ml entionisiertem Wasser aufgetragen und im Warmluftstrom getrocknet. Das Material wurde ca. 16 Std. bei 80 °C nachgetrocknet.

Nach Aufbringen der Metallverbindung wurden die Trägermatrialien 1 Std. bei Temperaturen zwischen 500 und 600 °C calciniert. Sodann wurden die Katalysatoren durch 10-stündiges Erhitzen auf 350 °C in einem Wasserstoff/Stickstoffstrom (Volumenverhältnis $H_2 : N_2$ = 1 : 4, Strömungsgeschwindigkeit 120 l/h) reduziert.

T A B E L L E

Katalysatoren

| Nr. | % Gew. Pd od.Rh | Trägermaterial | Teilchenform und Größen- angaben in mm | BET $m^2/g$ | Herstellungs- methode | Spezifische Nitritabbau- leistung mg $NO_2^-$/h.g Katalysator |
|---|---|---|---|---|---|---|
| 3a | 2,13 % Pd | $SiO_2$ [1] | Perlen Ø 0,1-0,2 | 300 | a | 13,3 |
| 3b | 5,91 % Pd | $\gamma Al_2O_3$ [2] hoher Dichte | Strangpreß- linge Ø 1,5 Länge ca. 4 | 200 | b• | 4,2 |
| 3c | 2,0 % Pd | $\gamma Al_2O_3$ [3] | Perlen Ø 0,1 | 157 | b | 50 |
| 3d | 2,0 % Pd | $\gamma Al_2O_3$ [4] | Kugeln Ø 1,0-1,5 | 175 | c | 9,4 |
| 3e | 3,0 % Pd | $\gamma Al_2O_3$ [5] | Hohlzylinder Ø außen 1,5 Ø innen 0,55 Länge ca. 5 | 180 | b | 11 |
| 3f | 5,0 % Rh | $\gamma Al_2O_3$ [5] | " | 180 | b | 6,5 |
| 3g | 2 % Pd | $\gamma Al_2O_3$ [5] | Hohlzylinder gemahlen Ø 0,4-1,0 | 180· | b•• | 18,7 |
| 3h | 2 % Pd | $SiO_2$ [6] | Perlen Ø 0,1-0,2 | ∿45 | b | 33,2 |
| 3i | 2 % Pd | bimodales $SiO_2$ [7] | Perlen Ø ∿0,1 | ∿40 | b••• | 13,3 |
| 3j | 2 % Pd | bimodales $SiO_2$ [7] | Perlen Ø ∿0,1 | ∿40 | a | 22,2 |

1) SiO₂-Perlen (Typ MP 100, Hersteller Fa. Kali-Chemie AG)

2) γ-Al₂O₃ high density Trägermaterial (γAl₂O₃ Typ HD, Hersteller Fa. Kali-Chemie AG)

3) γ-Al₂O₃-Perlen Puralox® (Typ SCC/a30/170, Hersteller Fa. Condea)

4) γ-Al₂O₃-Kugeln (Typ GS 1038, Hersteller Fa. Kali-Chemie AG)

5) γ-Al₂O₃-Hohlzylinder (Typ K500, Hersteller Fa. Dr. C. Otto)

6) SiO₂-Perlen (Typ 540, Hersteller Fa. Kali-Chemie AG)

7) SiO₂-Perlen (Typ 430, Hersteller Fa. Kali-Chemie AG) mit BET-Oberfläche ∿60 m²/g wurden zur Herstellung einer bimodalen Porenstruktur durch teilweise thermische Porenaufweitung 7 Std. auf 700 °C und anschließend 1 Std. auf 800 °C erhitzt. BET-Oberfläche nach thermischer Aufweitung = ∿40 m²/g

* Tränkvorgang 4 x wiederholt

** Tränkzeit 5 min

*** Zur Aufnahme des nach einer Tränkzeit von 1 min verbleibenden geringen Überschusses an Tränklösung wurde der Katalysator mit der Restlösung bis zur oberflächlichen Antrocknung in einer rotierenden Trommel unter Warmluft behandelt.

Beispiel 4:

Entfernung von Nitrat aus Wasser.

Die Umsetzung wurde in der in Beispiel 1 beschriebenen diskontinuierlichen Meßapparatur, welche zusätzlich noch mit einer Nitratmeßelektrode versehen wurde, durchgeführt.

Zur Herstellung eines Palladium/Kupfer/γ-Aluminiumoxid-Katalysators wurden 25 g des für Katalysator 3e verwendeten Trägermaterials (γ-Al₂O₃-Hohlzylinder, äußerer Durchmesser 1,5 mm, innerer Durchmesser 0,55 mm, Länge ca. 5 mm, BET-Oberfläche 180 m²/g, Hersteller Fa. Dr. C. Otto) während 2 min mit 25 ml einer Lösung von 6,67 % PdCl₂ und 2,27 % (Cu(NO₃)₂ . 3H₂O in Äthanol getränkt, und wie in Beispiel 3 beschrieben weiterbehandelt. Es wurde ein Katalysator mit einem Pd-Gehalt von annähernd 2 Gew.-% und einem Cu-Gehalt von annähernd 0,6 Gew.-% erhalten.

In den Reaktor wurden 500 ml Wasser mit einem Nitratgehalt von 100 ppm und einem pH von 6,0 und 2,0 g des vorstehend erhaltenen Palladium/Kupfer/γ-Aluminiumoxid-Katalysators gegeben. Die Temperatur im Reaktor wurde auf 10 °C eingestellt, und es wurde unter Rühren mit einer Rührgeschwindigkeit von 200 UpM mit Wasserstoff mit einer Begasungsrate von 10 ml/min gegast. Die spezifische Nitratabbauleistung des Katalysators bis zum vollständigen Abbau von 50 mg Nitrat in 500 ml Wasser wurde auf 1 h und 1 g Katalysator berechnet. Die nach vollständigem Nitratabbau gebildete Menge an Ammonium wurde photometrisch bestimmt.

12

Spezifische Nitratabbauleistung: 2,5 mg $NO_3^-$/h.g Katalysator,

$NH_4$-Konzentration in der Lösung: 0,3 ppm

Beispiel 5:

Nach der in Beispiel 4 beschriebenen Methode wurden auch die spezifische Nitratabbauleistung der nachfolgenden Katalysatoren in Wasser bestimmt.

| Nr. | Katalysator | spezifische Nitratabbauleistung mg $NO_3^-$/h.g Katalysator |
|-----|-------------|----------------------------------------|
| 5a | 5% Rh auf $\gamma$-$Al_2O_3$ =identisch mit Katalysator Nr.3f | 4,2 |
| 5b | 2% Pd und 0,6% Cu auf $\gamma$-$Al_2O_3$ Korngröße Ø 0,4-1,0 mm, BET 180 m²/g | 2,8 |
| 5c | 2% Pd und 0,5% Ag auf $\gamma$-$Al_2O_3$-Perlen[a] Korngröße Ø 45-90 $\mu$m, BET 211 m²/g | 36,1 |
| 5d | 2% Pd und 0,5% Cu auf $\gamma$-$Al_2O_3$-Perlen[a] Korngröße Ø 45-90 $\mu$m, BET 211 m²/g | 52,1 |
| 5e | 2% Rh auf $\gamma$-$Al_2O_3$-Perlen[a] Korngröße Ø 45-90 $\mu$m, BET 211 m²/g | 22,0 |

[a]) = $\gamma$-$Al_2O_3$-Perlen Puralox[R] (Typ SCC/a30/220), Hersteller Fa. Condea

Zur Herstellung des Katalysators 5b wurde das für Katalysastor 3g beschriebene Trägermaterial nach der in Beispiel 4 beschriebenen Methode behandelt.

Zur Herstellung der Katalysatoren 5c und 5d wurden die Trägermaterialien zur Aufbringung des Palladium analog der Vorschrift a) des Beispiels 3 mit einer wäßrigen Tetrammoniumpalladium(II)-hydroxid-Lösung behandelt und zur Aufbringung des Metalls der Kupfergruppe mit einer entsprechenden Metallnitratlösung analog der Vorschrift des Beispiels 4 getränkt, getrocknet und wie in Beispiel 3 beschrieben weiterbehandelt.

Die Herstellung des Katalysators 5e erfolgte analog der Herstellungsvorschrift b) des Beispiels 3.

## Beispiel 6:

Kontinuierliche Nitritentfernung aus Wasser

In einer Anlage gemäß Abb. 1 wurde aus einem das zu behandelnde Wasser enthaltenden 300 l fassenden Vorratsbehälter Wasser kontinuierlich in den 20 l fassenden Dosierbehälter (A) der Anlage eingeleitet. Das Wasser hatte einen Nitritgehalt von 6 mg/l und eine Temperatur von 10 °C. Der Dosierbehälter war mit einem pH-Messer versehen und über eine Dosiervorrichtung mit einem 1,0 n-Salzsäure enthaltenden Vorratsgefäß verbunden. Der pH-Wert das Wassers wurde in diesem dosierbehälter auf pH = 6 eingestellt. Aus dem Dosierbehälter floß das Wasser in den Durchlaufbehälter (A'). In dem Durchlaufbehälter waren Meßsonden zur Messung der Temperatur, des Redoxpotentials und des $O_2$-Gehaltes angebracht. Es wurden folgende Werte gemessen: Redoxpotential = 23,8 mV, $O_2$-Gehalt = 8,5 mg/l. Aus dem Durchlaufbehälter wurde das Wasser in eine UV-Durchflußlampe (B) geleitet und von dort aus über eine Pumpe (C) mit einer Durchflußgeschwindigkeit von 4 l/h und mit 1 bar Überdruck in den Begasungsbehälter (E) der Reaktionseinheit (D) geleitet. Der Begasungsbehälter hatte eine Höhe von 50 cm und einen Durchmesser von 5 cm. 10 m eines Permeationsmembranschlauches aus Silikonkautschuk waren kreisförmig übereinander in den Reaktor gelegt. Im Zentrum des Reaktors befand sich eine magnetisch betriebene Rührwelle, um den Gaseintrag zu verbessern. In diesem Gasbehälter wurde das durchfließende Wasser mit einer Begasungsrate von 80 ml/h mit Wasserstoffgas bei einem angelegten Wasserstoffdruck von 3 bar beladen. Dies entspricht einem 20 %-igen $H_2$-Überschuß. Aus dem Begasungsbehälter wurde das mit Wasserstoff gesättigte Wasser durch einen mit Meßsonden versehenen Durchlaufbehälter (E') geleitet. Das hier gemessene Redoxpotential betrug -80 mV. Das Wasser wurde weiter in den Festbettreaktor (F) geleitet. Der Reaktor hatte eine Höhe von 30 cm und einen Durchmesser von 2,5 cm (das entspricht einem Volumen von 230 ml). Der Reaktor enthielt 10 g des Katalysators Nr. 3g. Nach Austritt aus dem Reaktor (F) wurde das Wasser durch einen mit Meßsonden versehenen Durchlaufbehälter (G) geleitet, worin pH-Wert und Nitritgehalt des Wassers bestimmt wurden. Das Wasser hatte einen pH von 6,8. Der Nitritgehalt war auf unter 0,1 mg/l abgesunken.

Der vorstehende Versuch wurde mit dem gleichen Ausgangswasser unter Änderung der folgenden Parameter wiederholt: Durchflußgeschwindigkeit des Wassers: 15 l/h
Betriebsdruck: 3 bar
$H_2$-Begasungsrate 300 ml $H_2$/h bei 6 bar $H_2$-Druck.
Das aus dem Reaktor ablaufende Wasser hatte einen pH von 6,8 und einen Nitritgehalt von ≤ 0,1 mg/l.

## Beispiel 7:

Kontinuierliche Nitratentfernung aus Wasser

In einer Anlage gemäß Abb. 1 wurde das zu behandelnde Leitungswasser mit einem auf 100 mg/l angereicherten Nitratgehalt und einer Temperatur von 10 °C aus einem 300 l fassenden Vorratsbehälter kontinuierlich in den 20 l fassenden Dosierbehälter (A) der Anlage eingeleitet. Der Dosierbehälter war mit einem pH-Messer versehen und über eine dosiervorrichtung mit einem 1,0 n-Salzsäure enthaltenden Vorratsgefäß verbunden. Der pH-Wert des Wassers wurde in diesem Dosierbehälter auf pH = 6 eingestellt. Aus dem Dosierbehälter floß das Wasser in den Durchlaufbehälter (A'). In dem Durchlaufbehälter waren Meßsonden zur Messung der Temperatur, des Redoxpotentials und des $O_2$-Gehaltes angebracht. Es wurden folgende Werte gemessen: Redoxpotential = 390 mV, $O_2$-Gehalt = 7,5 mg/l. Aus dem Durchlaufbehälter wurde das Wasser in eine UV-Durchflußlampe (B) geleitet und von dort aus über eine Pumpe (C) mit einem Betriebsdruck von 6,5 bar und mit einer Durchflußgeschwindigkeit von 2,4 l/h in den Begasungsbehälter (E) der Reaktionseinheit (D) geleitet. Der Begasungsbehälter hatte eine Höhe von 50 cm und einen Durchmesser von 5 cm. 10 m eines Permeationsmembranschlauches aus Silikonkautschuk waren kreisförmig übereinander in den Reaktor gelegt. Im Zentrum des Reaktors befand sich eine magnetisch betriebene Rührwelle, um den Gaseintrag zu verbessern. In diesem Gesbehälter wurde das durchfließende Wasser mit einer Begasungsrate von 262 ml/h mit wasserstoffgas bei einem angelegten Wasserstoffdruck von 8 bar beladen. Dies entspricht einem 10 %-igen $H_2$-Überschuß. Aus dem Begasungsbehälter wurde das mit $H_2$-Gas beladene Wasser durch einen mit Meßsonden versehenen Durchlaufbehälter (E') geleitet. Das hier gemessene Redoxpotential betrug -108 mV. Das

**14**

Wasser wurde weiter in den Festbettreaktor (F) geleitet. Der Reaktor hatte eine Höhe von 30 cm und einen Durchmesser von 2,5 cm (das entspricht einem Volumen von 230 ml). Der Reaktor enthielt 12,0 g des Katalysators Nr. 5b. Nach Austritt aus dem Reaktor (F) wurde das Wasser durch einen mit Meßsonden versehenen Durchlaufbehälter (G) geleitet, worin der pH-Wert und der Nitrit- und Nitrat-gehalt bestimmt wurden. Das ablaufende Wasser hatte einen pH von 7 und der Nitrat-gehalt war bis auf eine Restnitratkonzentration von $\leq$ 5 mg/l abgebaut worden. Das ablaufende Wasser war nitritfrei.

Die spezifische Nitratabbauleistung bei dieser kontinuierlichen Verfahrensweise lag bei 19 mg $NO_3^-$/h.g Katalysator. Sie betrug somit etwa das 7-fache der spezifischen Nitratabbauleistung des gleichen Katalysators in der drucklosen diskontinuierlichen Verfahrensweise des Beispiels 5.

## Patentansprüche

1. Kontinuierlich durchführbares Verfahren zur Entfernung oder Verminderung des Nitrit- und/oder Nitratgehaltes von nitrit- und/oder nitratbelastetem Wasser unter selektiver Stickstoff-Bildung, dadurch gekennzeichnet, daß man in das nitrit- und/oder nitratbelastete Wasser Wasserstoffgas einführt und das mit Wasserstoff beladene Wasser mit einem Katalysator kontaktiert,

welcher gebildet wird aus einem mit einer aus Palladium und/oder Rhodium oder aus Palladium und einem Metall der Kupfergruppe bestehenden Metallkomponente imprägnierten porösen Träger, welcher

a) eine bimodale Porenradienverteilung mit einem mindestens 30 %-igen Anteil bezogen auf das Gesamtporenvolumen an Makroporen mit einem Mindestradius von 200 nm (2000 Å) besitzt und/oder

b) eine inhomogene Verteilung des Metalls mit einer Konzentrierung im Oberflächenbereich aufweist oder

c) als Pulver mit einem Telchendurchmesser kleiner als 50 μm vorliegt,

und dabei zur Behandlung von nur nitritbelastetem Wasser einen Katalysator, dessen Metallkomponente aus Palladium und/oder Rhodium besteht und, sofern das zu behandelnde Wasser auch Nitrat enthält, einen Katalysator, dessen Metallkomponente aus Palladium und einem Metall der Kupfergruppe oder aus Rhodium und gegebenenfalls Palladium besteht, oder ein Gemisch aus einem Katalysator, dessen Metallkomponente aus Palladium und einem Metall der Kupfergruppe besteht, und einem Katalysator, dessen Metallkomponente nur aus Palladium besteht, einsetzt, und dabei den pH-Wert des Wassers nicht über pH 8 ansteigen läßt und das Verfahren gegebenenfalls so oft hintereinander durchführt, bis der Nitrit-und/oder Nitratgehalt des Wassers entfernt oder auf einen tolerierbaren Wert vermindert ist.

2. Verfahren nach Anspruch 1, dadurch gekennzeichnet, daß man einen Katalysator verwendet, dessen Träger eine bimodale Porenradienverteilung mit einem Maximum der Porenradienverteilung im Bereich von Poren mit einem Radius bis zu 40 nm (400 Å), insbesondere 5 bis 35 nm (50 bis 350 Å), und einem zweiten Maximum der Porenradienverteilung im Bereich von Makroporen mit einem Radius von mindestens 200 nm (2000 Å) besitzt.

3. Verfahren nach Anspruch 2, dadurch gekennzeichnet, daß der Träger des Katalysators eine bimodale Porenradienverteilung mit einem Maximum der Porenradienverteilung im Bereich von Poren mit einem Radius von 5 bis 30 nm (50 bis 300 Å), insbesondere 5 bis 20 nm (50 bis 200 Å), und einem zweiten Maximum der Porenradienverteilung im Bereich von Makroporen mit einem Radius von 500 bis 2000 nm (5000 Å bis 20.000 Å) besitzt.

4. Verfahren nach Anspruch 2, dadurch gekennzeichnet, daß der Träger einen Makroporenanteil von zwischen 20 und 60 %, vorzugsweise zwischen 40 und 60 %, bezogen auf das Gesamtporenvolumen enthält.

5. Verfahren nach Anspruch 1, dadurch gekennzeichnet, daß man einen Katalysator verwendet, welcher eine inhomogene Verteilung des Metalles auf dem Träger mit einer Konzentration im Oberflächenbereich aufweist.

6. Verfahren nach Anspruch 5, dadurch gekennzeichnet, daß das Metall im Oberflächenbereich des Trägers mit einer Eindringtiefe von höchstens 50 μm konzentriert ist.

7. Verfahren nach Anspruch 1, dadurch gekennzeichnet, daß der Katalysator als Pulver eingesetzt wird.

8. Verfahren nach Anspruch 7, dadurch gekennzeichnet, daß ein Pulver mit einem Teilchendurchmesser kleiner als 20 μm eingesetzt wird.

9. Verfahren nach Anspruch 1, dadurch gekennzeichnet, daß als Träger des Katalysators ein anorganisches Trägermaterial, vorzugsweise Aluminiumoxid, Siliciumoxid oder Alumosilikate, verwendet wird.

10. Verfahren nach Anspruch 9, dadurch gekennzeichnet, daß als Trägermaterial γ-Aluminiumoxid verwendet wird.

11. Verfahren nach Anspruch 1, dadurch gekennzeichnet, daß als Metalle der Kupfergruppe Kupfer oder Silber, vorzugsweise Kupfer, eingesetzt werden.

12. Verfahren nach Anspruch 1, dadurch gekennzeichnet, daß der Anteil der Metallkomponente am

15

Gesamtkatalysator zwischen 0,1 und 10 Gew.-% beträgt.

13. Verfahren nach Anspruch 12, dadurch gekennzeichnet, daß der Katalysator einen Palladiumgehalt von 1 bis 5, vorzugsweise 2 bis 5 Gew.-%, bezogen auf das Gesamtgewicht des Katalysators enthält.

14. Verfahren nach Anspruch 1, dadurch gekennzeichnet, daß ein mit Palladium und Kupfer imprägnierter Katalysator eingesetzt wird.

15. Verfahren nach Anspruch 14, dadurch gekennzeichnet, daß das Gewichtsverhältis von Palladium zu Kupfer zwischen 2 : 1 und 8 : 1, vorzugsweise 3 : 1 und 5 : 1 liegt.

16. Verfahren nach Anspruch 1, dadurch gekennzeichnet, daß man einen Katalysator verwendet, welcher aus einem Gemisch aus mit Palladium und einem Metall der Kupfergruppe, insbesondere Kupfer imprägnierten Trägerteilchen und nur mit Palladium imprägnierten Trägerteilchen gebildet wird.

17. Verfahren nach Anspruch 1, dadurch gekennzeichnet, daß in das Wasser eine solche Menge Wasserstoff eingeführt wird, welche mindestens der zur Reduktion des vorbestimmten Gehaltes an Sauerstoff und Nitrit und/oder Nitrat stöchiometrisch notwendigen Wasserstoffmenge und höchstens einem 20%-igen Überschuß dieser Menge entspricht.

18. Verfahren nach Anspruch 1, dadurch gekennzeichnet, daß man das nitrit- und/oder nitratbelastete Wasser vor der Begasung mit Wasserstoff einer Entkeimung unterzieht.

19. Verfahren nach Anspruch 1, dadurch gekennzeichnet, daß man Wasser einsetzt, welches mit etwa 0,1 bis 20 mg/l Nitrit und/oder 10 bis 300 mg/l Nitrat belastet ist.

20. Verfahren nach Anspruch 1, dadurch gekennzeichnet, daß man

a) das nitrit- und/oder nitratbelastete Wasser mit einem vorbestimmten Gehalt an Sauerstoff, Nitrit-und-/oder Nitrat kontinuierlich in einen dosierbehälter (A) einleitet, in welchem der pH-Wert kontrolliert und nötigenfalls durch Zusatz von Säure auf einen Wert von höchstens pH 8, vorzugsweise zwischen pH 2 und pH 7, eingestellt wird,

b) das Wasser vor oder nach dem Durchfluß durch den Dosierbehälter (A) zur Keimtötung durch eine Entkeimungsvorrichtung, insbesondere eine UV-Durchflußlampe (B), leitet, und

c) das so behandelte Wasser über eine die Durchflußgeschwindigkeit regulierende Pumpe (C) mit variabler Förderleistung durch eine oder mehrere Reaktionseinheiten (D), welche je einen Begasungsbehälter (E) und einen Reaktor (F) enthalten, leitet, worin das Wasser zunächst in den Begasungsbehälter (E) geführt und darin mit Wasserstoffgas gegebenenfalls unter Druck begast und innig vermischt wird und anschließend durch den ein Katalysatorbett mit dem Katalysator enthaltenden Reaktor (F) geführt wird, wobei das Wasser insgesamt so viele Reaktionseinheiten (D) durchläuft, wie zur Reduktion des Sauerstoffgehaltes und des Nitrit-und/oder Nitratgehaltes des Wassers notwendig sind, wobei der pH-Wert des Wassers in Stufe a) und bei einem allfälligen Weiterleiten von einer Reaktionseinheit (D) in eine nachfolgende Reaktionseinheit (D) jeweils so einreguliert wird, daß ein reaktionsbedingtes Ansteigen des pH-Wertes in der nachfolgenden reaktionseinheit höchstens bis zu pH 8 führt und/oder im Reaktor selbst der pH-Wert überwacht und nötigenfalls eine solche Menge Säure zudosiert wird, daß der pH-Wert nicht über pH 8 ansteigt.

21. Katalysator bestehend aus einem mit einer Metallkomponente imprägnierten porösen anorganischem Trägermaterial, dadurch gekennzeichnet, daß die Metallkomponente aus Palladium und/oder Rhodium oder Palladium und einem Metall aus der Kupfergruppe besteht, und das Trägermaterial eine bimodale Porenradienverteilung mit einem mindestens 20 %-igem Anteil bezogen auf das Gesamtporenvolumen an Makroporen mit einem Mindestradius von 200 nm (2000 Å) besitzt.

22. Katalysator nach Anspruch 21, dessen Trägermaterial eine bimodale Porenradienverteilung mit einem Maximum der Porenradienverteilung im Bereich von Poren mit einem Radius bis zu 40 nm (400 Å), insbesondere 5 bis 35 nm (50 bis 350 Å), und einem zweiten Maximum der Porenradienverteilung im Bereich von Makroporen mit einem Radius von mindestens 200 nm (2000 Å) besitzt.

23. Katalysator nach Anspruch 22, dadurch gekennzeichnet, daß der Träger des Katalysators eine bimodale Porenradienverteilung mit einem Maximum der Porenradienverteilung im Bereich von Poren mit einem Radius von 5 bis 30 nm (50 bis 300 Å), insbesondere 5 bis 20 nm (50 bis 200 Å), und einem zweiten Maximum der Porenradienverteilung im Bereich von Makroporen mit einem Radius von 500 bis 2000 nm (5000 Å bis 20.000 Å) besitzt.

24. Katalysator nach Anspruch 21, dadurch gekennzeichnet, daß der Träger einen Makroporenanteil von zwischen 20 und 60 %, vorzugsweise zwischen 20 und 40 %, bezogen auf das Gesamtporenvolumen enthält.

25. Katalysator nach Anspruch 21, dadurch gekennzeichnet, daß als Trägermaterial ein Aluminiumoxid, vorzugsweise γ-Aluminiumoxid, ein Siliciumoxid oder ein Alumosilikat verwendet wird.

26. Katalysator nach Anspruch 21, dadurch gekennzeichnet, daß das Metall der Kupfergruppe Kupfer oder Silber, vorzugsweise Kupfer, ist.

27. Katalysator nach Anspruch 21, dadurch gekennzeichnet, daß die Metallkomponente 0,1 - 10 Gew.-%

16

des Gesamtkatalysators beträgt.

28. Katalysator nach Anspruch 21, dadurch gekennzeichnet, daß der Katalysator einen Palladiumgehalt von 1 bis 5, vorzugsweise 2 bis 5 Gew.-%, bezogen auf das Gesamtgewicht des Katalysators enthält.

29. Katalysator nach Anspruch 21, dadurch gekennzeichnet, daß die Metallkomponente aus Palladium und Kupfer besteht.

30. Katalysator nach Anspruch 29, dadurch gekennzeichnet, daß das Gewichtsverhältnis von Palladium zu Kupfer zwischen 2 : 1 und 8 : 1, vorzugsweise 3 : 1 und 5 : 1, ist.

31. Katalysator nach Anspruch 21, dadurch gekennzeichnet, daß er aus einem Gemisch aus mit Palladium und einem Metall der Kupfergruppe, insbesondere Kupfer imprägnierten Trägerteilchen und nur mit Palladium imprägnierten Trägerteilchen besteht.

32. Katalysator nach Anspruch 31, dadurch gekennzeichnet, daß zwischen nur mit Palladium imprägnierten Trägerteilchen und mit Palladium und einem Metall der Kupfergruppe, insbesondere Kupfer imprägnierten Trägerteilchen ein Gewichtsverhältnis von 1 : 5 bis 5 : 1 vorliegt.

33. Anlage zur kontinuierlichen Durchführung des Verfahrens gemäß Anspruch 1 zur Entfernung des Nitrit- und/oder Nitratgehaltes aus Wasser, dadurch gekennzeichnet, daß sie umfaßt

a′)einen Dosierbehälter (A), welcher einen Flüssigkeitseinlaß zum Einführen des Wassers und einen Flüssigkeitsauslaß zum Abführen des Wassers besitzt und mit einer pH-Meß- und -Regelvorrichtung versehen ist,

b′) eine Entkeimungsvorrichtung, vorzugsweise eine UV-Durchflußlampe (B),

c′)eine oder mehrere Reaktionseinheiten (D), welche gebildet sind aus je einem Begasungsbehälter (E), welcher mit einem Flüssigkeitseinlaß für das Wasser und an dem gegenüberliegenden Ende mit einem Flüssigkeitsauslaß für das Wasser versehen ist und einen über eine Permeationsmembran führenden Einlaß für Wasserstoffgas besitzt, und damit verbunden je einem ein Katalysatorbett mit einem Katalysator gemäß Anspruch 1 enthaltenden Reaktor (F), welcher einen Flüssigkeitseinlaß für das Wasser und einen Flüssigkeitsauslaß für das Wasser besitzt und gegebenenfalls mit einer pH-Meß- und Regeleinrichtung versehen ist,

wobei Rohrleitungen zum Transport des Wassers den unter a′) beschriebenen Dosierbehälter (A) mit der unter b′) beschriebenen Entkeimungsvorrichtung (B) und diese oder den Dosierbehälter (A) über eine Pumpe (C) mit variabler Förderleistung mit dem unter c′) beschriebenen Begasungsbehälter (E) der Reaktionseinheit (D) und diesen gegebenenfalls über einen mit Meßsonden versehenen Durchflußbehälter mit dem Reaktor (F) verbinden, und allfällige mehrere Reaktionseinheiten (D) mit einer gegebenenfalls mit einer pH-Meß- und Regeleinrichtung versehenen Rohrleitung untereinander verbunden sind.

## Claims

1. A continuously performable process for removing or reducing the nitrite and/or nitrate content of nitrite- and/or nitrate-polluted water with the selective formation of nitrogen, characterised in that hydrogen gas is introduced into the nitrite- and/or nitrate-polluted water and the water loaded with hydrogen is contacted with a catalyst, which is formed of a porous carrier impregnated with a metal constituent consisting of palladium and/or rhodium or of palladium and a metal of the copper group, which carrier

a) has a bimodal pore radius distribution with a content of at least 20%, relative to the total pore volume, of macropores having a minimum radius of 200 nm (2,000 Å) and/or

b) has a non-homogenous distribution of the metal with a concentration in the surface area or

c) is a powder having a particle diameter of less than 50 μm,

and wherein for the treatment of water which is only nitrite-polluted, a catalyst is used the metal constituent of which consists of palladium and/or rhodium and, if the water to be treated also contains nitrate, a catalyst is used, the metal constituent of which consists of palladium and a metal of the copper group, or of rhodium and optionally palladium, or a mixture is used of a catalyst, the metal constituent of which consists of palladium and a metal of the copper group, and of a catalyst, the metal constituent of which consists solely of palladium, and the pH value of the water is not permitted to rise above pH 8 and optionally the process is performed consecutively as often as necessary until the nitrite and/or nitrate content of the water has been removed or reduced to a tolerable value.

2. A process according to Claim 1, characterised in that a catalyst is used, the carrier of which has a bimodal pore radius distribution having a maximum of pore radius distribution in the region of pores having a radius of up to 40 nm (400 Å), in particular 5 to 35 nm (50 to 350 Å), and a second maximum of pore radius distribution in the region of macropores having a radius of at least 200 nm (2,000 Å).

3. A process according to Claim 2, characterised in that the carrier of the catalyst has a bimodal pore radius distribution having a maximum of pore radius distribution in the region of pores having a radius of 5 to 30 nm (50 to 300 Å), in particular 5 to 20 nm (50 to 200 Å), and a second maximum of pore radius distribution in the region of macropores having a radius of 500 to 2,000 nm (5,000 Å to 20,000 Å).

4. A process according to Claim 2, characterised in that the carrier has a macropore content of between 20 and 60%, preferably between 40 and 60%, relative to the total pore volume.

5. A process according to Claim 1, characterised in that a catalyst is used which has a non-homogenous distribution of the metal on the carrier with a concentration in the surface region.

6. A process according to Claim 5, characterised in that the metal is concentrated in the surface region of the carrier with a depth of penetration of at most 50 μm.

7. A process according to Claim 1, characterised in that the catalyst is used in powder form.

8. A process according to Claim 7, characterised in that a powder having a particle diameter of less than 20 μm is used.

9. A process according to Claim 1, characterised in that an inorganic carrier material, preferably aluminium oxide, silicon oxide or alumosilicates, is used as the carrier of the catalyst.

10. A process according to Claim 9, characterised in that γ-aluminium oxide is used as the carrier material.

11. A process according to Claim 1, characterised in that copper or silver, preferably copper, are used as metals of the copper group.

12. A process according to Claim 1, characterised in that the proportion of the metal constituent in the entire catalyst is between 0.1 and 10% by weight.

13. A process according to Claim 12, characterised in that the catalyst has a palladium content of 1 to 5, preferably 2 to 5, % by weight, relative to the total weight of the catalyst.

14. A process according to Claim 1, characterised in that a catalyst impregnated with palladium and copper is used.

15. A process according to Claim 14, characterised in that the weight ratio of palladium to copper is between 2 : 1 and 8 : 1, preferably 3 : 1 and 5 : 1.

16. A process according to Claim 1, characterised in that a catalyst is used which is formed from a mixture of carrier particles impregnated with palladium and a metal of the copper group, in particular copper, and carrier particles impregnated solely with palladium.

17. A process according to Claim 1, characterised in that a quantity of hydrogen is introduced into the water which corresponds at least to the quantity of hydrogen which is stoichiometrically required for reduction of the predetermined content of oxygen and nitrite and/or nitrate and at most to a 20% excess of this quantity.

18. A process according to Claim 1, characterised in that the nitrite- and/or nitrate-polluted water is subjected to germicidal treatment before the gassing with hydrogen.

19. A process according to Claim 1, characterised in that water is used which is polluted with about 0.1 to 20 mg/l nitrite and/or 10 to 300 mg/l nitrate.

20. A process according to Claim 1, characterised in that

a) the nitrite- and/or nitrate-polluted water having a predetermined content of oxygen, nitrite and/or nitrate is introduced continuously into a dosing tank (A) in which the pH value is monitored and if necessary adjusted to a value of at most pH 8, preferably between pH 2 and pH 7, by adding acid,

b) before or after passing through the dosing tank (A), the water is passed through a germ-reducing apparatus, in particular a UV discharge lamp (B) for germicidal treatment, and

c) the water thus treated is passed via a flow rate-regulating pump (C) which has a variable pumping capacity through one or more reaction units (D), each containing a gassing vessel (E) and a reactor (F), wherein the water is first passed into the gassing vessel (E) and therein is gassed and thoroughly mixed with hydrogen gas, optionally under pressure, and then is passed through the reactor (F) containing a catalyst bed with the catalyst, the water passing through as many reaction units (D) in total as are required for the reduction of the oxygen content and the nitrite and/or nitrate content of the water, whereby in stage a) and in the case of any further passage from one reaction unit (D) into a subsequent reaction unit (D) the pH-value of the water is adjusted in each case such that a reaction-inherent increase in the pH value in the subsequent reaction unit leads at most to pH 8, and/or in the reactor itself the pH value is monitored and if necessary such a quantity of acid is added that the pH value does not exceed pH 8.

21. A catalyst consisting of a porous inorganic carrier material impregnated with a metal constituent, characterised in that the metal constituent consists of palladium and/or rhodium or palladium and a metal of the copper group, and the carrier material has a bimodal pore radius distribution with a content of at least 20%, relative to the total pore volume, of macropores having a minimum radius of 200 nm (2,000 Å).

22. A catalyst according to Claim 21, the carrier material of which has a bimodal pore radius distribution having a maximum of pore radius distribution in the region of pores having a radius of up to 40 nm (400 Å), in particular 5 to 35 nm (50 to 350 Å), and a second maximum of pore radius distribution in the region of macropores having a radius of at least 200 nm (2,000 Å).

23. A catalyst according to Claim 22, characterised in that the carrier of the catalyst has a bimodal pore radius distribution with a maximum of pore radius distribution in the region of pores having a radius of 5 to 30 nm (50 to 300 Å), in particular 5 to 20 nm (50 to 200 Å), and a second maximum of pore radius distribution in the region of macropores having a radius of 500 to 2,000 nm (5,000 Å to 20,000 Å).

24. A catalyst according to Claim 21, characterised in that the carrier has a macropore content of between 20 and 60%, preferably between 20 and 40%, relative to the total pore volume.

25. A catalyst according to Claim 21, characterised in that an aluminium oxide, preferably γ-aluminium oxide, a silicon oxide or an alumosilicate is used as the carrier material.

26. A catalyst according to Claim 21, characterised in that the metal of the copper group is copper or silver, preferably copper.

27. A catalyst according to claim 21, characterised in that the metal constituent is 0.1-10% by weight of the entire catalyst.

28. A catalyst according to Claim 21, characterised in that the catalyst has a palladium content of 1 to 5, preferably 2 to 5, % by weight, relative to the total weight of the catalyst.

29. A catalyst according to Claim 21, characterised in that metal constituent consists of palladium and copper.

30. A catalyst according to Claim 29, characterised in that the weight ratio of palladium to copper is between 2 : 1 and 8 : 1, preferably 3 : 1 and 5 : 1.

31. A catalyst according to Claim 21, characterised in that it consists of a mixture of carrier particles impregnated with palladium and a metal of the copper group, in particular copper, and of carrier particles impregnated solely with palladium.

32. A catalyst according to Claim 31, characterised in that there is a weight ratio of 1 : 5 to 5 : 1 between carrier particles impregnated solely with palladium and carrier particles impregnated with palladium and a metal of the copper group, in particular copper.

33. An installation for the continuous performance of the process according to Claim 1 for the removal of the nitrite and/or nitrate content from water, characterised in that it comprises

a') a dosing tank (A) which has a liquid inlet for introducing the water, and a liquid outlet for removing the water and is provided with a pH-measuring and adjusting device,

b') a germ-reducing apparatus, preferably a UV discharge lamp (B),

c') one or more reaction units (D) which are each formed of one gassing vessel (E) which is provided with a liquid inlet for the water and at the opposite end with a liquid outlet for the water and has an inlet for hydrogen gas which leads through a permeation membrane, and connected thereto one reactor (F) in each case containing a catalyst bed with a catalyst according to Claim 1, which reactor has a liquid inlet for the water and a liquid outlet for the water and is optionally provided with a pH-measuring and adjusting device, whereby pipes for transporting the water connect the dosing tank (A) which is described under a') to the germ-reducing apparatus (B) described under b') and connect the latter or the dosing tank (A) via a pump (C) having a variable pumping capacity to the gassing vessel (E) of the reaction unit (D) described under c') and connect said vessel to the reactor (F) optionally via a through-flow vessel provided with measuring probes, and if there is a plurality of reaction units (D) these are connected to each other by a pipe which may optionally be provided with a pH-measuring and adjusting device.

## Revendications

1. Procédé pouvant être mis en oeuvre en continu pour éliminer ou diminuer la teneur en nitrites et/ou en nitrates d'une eau chargée en nitrites et/ou en nitrates, avec formation sélective d'azote, caractérisé en ce qu'on introduit de l'hydrogène gazeux dans l'eau chargée en nitrites et/ou en nitrates, et que l'on met en contact l'eau chargée d'hydrogène avec un catalyseur, formé à partir d'un support poreux, imprégné d'un composant métallique constitué de palladium et/ou de rhodium ou de palladium et d'un métal du groupe du cuivre, support qui :

a) possède une répartition bimodale des rayons des pores, avec un pourcentage des macropores ayant un rayon minimal de 200 nm (2000 Angstroms) d'au moins 20 % par rapport au volume total des pores, et/ou

b) présente une répartition inhomogène du métal avec une concentration dans la zone superficielle, ou

c) se présente sous forme d'une poudre ayant une granulométrie inférieure à 50 μm ;

que, pour le traitement de l'eau seulement chargée en nitrites, on utilise un catalyseur dont le composant métallique est constitué de palladium et/ou de rhodium et, dans la mesure où l'eau à traiter contient aussi des nitrates, un catalyseur dont le composant métallique est constitué de palladium et d'un métal du groupe du cuivre ou encore de rhodium et éventuellement de palladium, ou bien un mélange d'un catalyseur dont le composant métallique est constitué de palladium et d'un métal du groupe du cuivre et d'un catalyseur dont le composant métallique n'est constitué que de palladium ; qu'on ne laisse alors pas monter le pH de l'eau au-delà de 8; et que l'on met en oeuvre le procédé éventuellement plusieurs fois de suite, jusqu'à ce que la teneur de l'eau en nitrites et/ou en nitrates soit annulée ou soit abaissée à une valeur tolérable.

2. Procédé selon la revendication 1, caractérisé en ce qu'on utilise un catalyseur dont le support présente une répartition bimodale des rayons des pores, avec un maximum de la répartition des rayons des pores dans la zone des pores ayant un rayon allant jusqu'à 40 nm (400 A), en particulier de 5 à 35 nm (50 à 350 A), et avec un deuxième maximum de la répartition des rayons des pores dans la zone des macropores ayant un rayon d'au moins 200 nm (2000 A).

3. Procédé selon la revendication 2, caractérisé en ce que le support du catalyseur présente une répartition bimodale des rayons des pores, avec un maximum de la répartition des rayons des pores dans la zone des pores ayant un rayon de 5 à 30 nm (50 à 300 A), en particulier de 5 à 20 nm (50 à 200 A), et avec un deuxième maximum de la répartition des rayons des pores dans la zone des macropores ayant un rayon de 500 à 2000 nm (5000 à 20 000 A).

4. Procédé selon la revendication 2, caractérisé en ce que le support a une teneur en macropores comprise entre 20 et 60%, de préférence entre 40 et 60 % par rapport au volume total des pores.

5. Procédé selon la revendication 1, caractérisé en ce qu'on utilise un catalyseur présentant une répartition inhomogène du métal sur le support avec une concentration dans la zone superficielle.

6. Procédé selon la revendication 5, caractérisé en ce que le métal se trouvant dans la zone superficielle du support est concentré avec une profondeur de pénétration d'au plus 50 μm.

7. Procédé selon la revendication 1, caractérisé en ce que le catalyseur est utilisé sous forme d'une poudre.

8. Procédé selon la revendication 7, caractérisé en ce qu'on utilise une poudre ayant une granulométrie inférieure à 20 μm.

9. Procédé selon la revendication 1, caractérisé en ce qu'on utilise comme support du catalyseur un matériau support minéral, de préférence de l'oxyde d'aluminium, de l'oxyde de silicium ou des aluminosilicates.

10. Procédé selon la revendication 9, caractérisé en ce qu'on utilise comme matériau support de l'oxyde d'aluminium gamma.

11. Procédé selon la revendication 1, caractérisé en ce qu'on utilise comme métaux du groupe du cuivre le cuivre ou l'argent, de préférence le cuivre.

12. Procédé selon la revendication 1, caractérisé en ce que la quantité du composant métallique par rapport au catalyseur total est comprise entre 0,1 et 10 % en poids.

13. Procédé selon la revendication 12, caractérisé en ce que le catalyseur a une teneur en palladium de 1 à 5 et de préférence de 2 à 5 % en poids par rapport au poids total du catalyseur.

14. Procédé selon la revendication 1, caractérisé en ce qu'on utilise un catalyseur imprégné de palladium et de cuivre.

15. Procédé selon la revendication 14, caractérisé en ce que le rapport pondéral du palladium au cuivre est compris entre 2:1 et 8:1, de préférence entre 3:1 et 5:1.

16. Procédé selon la revendication 1, caractérisé en ce qu'on utilise un catalyseur qui est formé à partir d'un mélange de particules de support imprégnées de palladium et d'un métal du groupe du cuivre, en particulier le cuivre, et de particules de support seulement imprégnées de palladium.

17. Procédé selon la revendication 1, caractérisé en ce qu'on introduit dans l'eau une quantité d'hydrogène qui correspond au moins à la quantité d'hydrogène stoechiométriquement nécessaire à la réduction de la teneur prédéfinie en oxygène et en nitrites et/ou en nitrates, et au plus à un excès de 20 % par rapport à cette quantité.

18. Procédé selon la revendication 1, caractérisé en ce qu'on soumet l'eau chargée en nitrites et/ou en nitrates, avant introduction de l'hydrogène, à une stérilisation.

19. Procédé selon la revendication 1, caractérisé en ce qu'on utilise une eau chargée d'environ 0,1 à 20 mg/l de nitrites et/ou de 10 à 300 mg/l de nitrates.

20. Procédé selon la revendication 1, caractérisé en ce que :

a) on introduit en continu l'eau chargée en nitrites et/ou en nitrates, ayant une teneur prédéfinie en oxygène, en nitrites et/ou en nitrates, dans un récipient doseur (A), dans lequel le pH est régulé et éventuellement ajusté, par addition d'acide, à une valeur au plus égale à 8 et de préférence comprise entre 2 et 7,

b) on fait passer l'eau, avant ou après traversée du récipient doseur (A), et pour la destruction des germes, dans un dispositif stérilisateur, en particulier une lampe à rayons UV (B), et

c) on envoie l'eau ainsi traitée, par l'intermédiaire d'une pompe (C) assurant une régulation de la vitesse de passage et à débit de refoulement variable, à travers une ou plusieurs unités de réaction (D), qui chacune contient un réservoir de barbotage (E) et un réacteur (F), l'eau étant d'abord envoyée dans le réservoir de barbotage (E) en y recevant de l'hydrogène gazeux, éventuellement sous pression et en y étant mélangée d'une manière intime, avant d'être envoyée à travers le réacteur (F), qui contient un lit de catalyseur contenant le catalyseur ; ce à l'occasion de quoi l'eau traverse globalement un nombre d'unités de réaction (D) suffisant pour permettre la réduction de l'oxygène et des nitrites et/ou des nitrates contenus dans l'eau, auquel cas le pH de l'eau, dans l'étape (a), et lorsqu'elle est éventuellement envoyée de l'unité de réaction (D) dans l'unité de réaction (D) suivante, est ajusté de façon qu'une élévation du pH, provoquée par la réaction, conduise dans l'unité de réaction suivante à un pH maximal de 8, et/ou le pH soit surveillé dans le réacteur même et, si nécessaire, on ajoute une quantité d'acide suffisante pour que le pH ne dépasse pas 8.

21. Catalyseur constitué d'un matériau support minéral poreux imprégné d'un composant métallique, caractérisé en ce que le composant métallique est constitué de palladium et/ou de rhodium ou de palladium et d'un métal du groupe du cuivre, et que le matériau support présente une répartition bimodale des rayons des pores, une partie d'au moins 20 %, rapportée au volume total des pores, constituant des macropores ayant un rayon minimal de 200 nm (2000 A).

22. Catalyseur selon la revendication 21, dont le matériau support présente une répartition bimodale des rayons des pores avec un maximum de la répartition des rayons des pores dans la zone des pores ayant un rayon allant jusqu'à 40 nm (400 A), en particulier de 5 à 35 nm (50 à 350 A), et avec un deuxième maximum de la répartition des rayons des pores dans la zone des macropores ayant un rayon d'au moins 200 nm (2000 A).

23. Catalyseur selon la revendication 22, caractérisé en ce que le support du catalyseur présente une répartition bimodale des rayons des pores, avec un maximum de la répartition des rayons des pores dans la zone des pores ayant un rayon de 5 à 30 nm (50 à 300 A), en particulier de 5 à 20 nm (50 à 200 A), et avec un deuxième maximum de la répartition des rayons des pores dans la zone des macropores ayant un rayon de 500 à 2000 nm (5000 à 20 000 A).

24. Catalyseur selon la revendication 21, caractérisé en ce que le support a une teneur en macropores comprise entre 20 et 60%, de préférence entre 20 et 40 % par rapport au volume total des pores.

25. Catalyseur selon la revendication 21, caractérisé en ce qu'on utilise comme matériau support un oxyde d'aluminium, de préférence l'oxyde d'aluminium gamma, un oxyde de silicium ou un aluminosilicate.

26. Catalyseur selon la revendication 21, caractérisé en ce que le métal du groupe du cuivre est le cuivre ou l'argent, de préférence le cuivre.

27. Catalyseur selon la revendication 21, caractérisé en ce que le composant métallique compte pour 0,1 à 10 % en poids du catalyseur total.

28. Catalyseur selon la revendication 21, caractérisé en ce que le catalyseur a une teneur en palladium de 1 à 5 et de préférence de 2 à 5 % en poids par rapport au poids total du catalyseur.

29. Catalyseur selon la revendication 21, caractérisé en ce que le composant métallique est constitué de palladium et de cuivre.

30. Catalyseur selon la revendication 29, caractérisé en ce que le rapport pondéral du palladium au cuivre est compris entre 2:1 et 8:1, de préférence entre 3:1 et 5:1.

31. Catalyseur selon la revendication 21, caractérisé en ce qu'il est constitué d'un mélange de particules de support imprégnées de palladium et d'un métal du groupe du cuivre, en particulier le cuivre, et de particules de support seulement imprégnées de palladium.

32. Catalyseur selon la revendication 31, caractérisé en ce qu'on a un rapport pondéral de 1:5 à 5:1 entre les particules de support seulement imprégnées de palladium et les particules de support imprégnées de palladium et d'un métal du groupe du cuivre, en particulier le cuivre.

33. Installation destinée à la mise en oeuvre continue du procédé selon la revendication 1 pour éliminer les nitrites et/ou les nitrates contenus dans l'eau, caractérisée en ce qu'elle comporte

a') un récipient doseur (A), qui possède un orifice d'entrée de liquide destiné à l'introduction de l'eau et un orifice de sortie de liquide destiné à l'évacuation de l'eau, et est pourvu d'un dispositif de mesure et de régulation du pH,

b') un dispositif de stérilisation, de préférence une lampe UV (B),

c') une ou plusieurs unités de réaction (D), dont chacune est constituée d'un réservoir de barbotage (E), lequel est pourvu d'un orifice d'entrée de liquide destiné à l'eau et, à l'extrémité opposée, d'un orifice de sortie de liquide destiné à l'eau, et possède un orifice d'entrée, conduisant sur une membrane perméable, destinée à l'hydrogène gazeux et, relié à chaque réservoir de barbotage, un réacteur (F), contenant un lit de catalyseur constitué d'un catalyseur selon la revendication 1, réacteur qui possède un orifice d'entrée de liquide destiné à l'eau et un orifice de sortie de liquide destiné à l'eau et est éventuellement pourvu d'un dispositif de mesure et de régulation du pH,

où des tuyauteries destinées au transport de l'eau relient le récipient doseur (A), décrit en a'), avec le dispositif de stérilisation (B), décrit en b'), et ce dernier ou le récipient doseur (A), par l'intermédiaire d'une pompe (C) à débit de refoulement variable, avec le réservoir de barbotage (E) décrit en c') de l'unité de réaction (D) et, éventuellement, ce dernier réservoir, par l'intermédiaire d'un réservoir de passage muni de sondes de mesure, avec le réacteur (F), et les éventuelles plusieurs unités de réaction (D) sont reliées les unes aux autres à l'aide d'une tuyauterie éventuellement pourvue d'un dispositif de mesure et de régulation du pH.

Abbildung 1